(19) Europäisches Patentamt
European Patent Office
Office européen des brevets

(11) **EP 3 369 544 B1**

(12) **EUROPÄISCHE PATENTSCHRIFT**

(45) Veröffentlichungstag und Bekanntmachung des Hinweises auf die Patenterteilung:
**23.09.2020 Patentblatt 2020/39**

(51) Int Cl.:
***B29C 45/14*** *(2006.01)*

(21) Anmeldenummer: **18155544.2**

(22) Anmeldetag: **07.02.2018**

(54) **HOHLPROFIL-VERBUNDTECHNOLOGIE**

HOLLOW PROFILE COMPOSITE TECHNOLOGY

TECHNOLOGIE COMPOSITE DE PROFILÉS CREUX

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **03.03.2017 EP 17159057**
**25.07.2017 EP 17182925**

(43) Veröffentlichungstag der Anmeldung:
**05.09.2018 Patentblatt 2018/36**

(73) Patentinhaber: **LANXESS Deutschland GmbH**
**50569 Köln (DE)**

(72) Erfinder: **KOCH, Boris**
**42929 Wermelskirchen (DE)**

(56) Entgegenhaltungen:
**WO-A1-2018/114731 DE-A1-102014 019 724**
**US-A- 5 306 459 US-A1- 2012 189 403**
**US-A1- 2015 284 035**

EP 3 369 544 B1

## Beschreibung

Die Erfindung betrifft ein Verfahren zur Herstellung eines Verbundbauteils aus wenigstens einem Hohlprofilgrundkörper und wenigstens einem, im Inneren des wenigstens einen Hohlprofilgrundkörpers positionierten, Stützelement.

Vielfach werden Verbundbauteile bereits heute im Kraftfahrzeugbau eingesetzt. Zumeist werden sie aus einem metallischen Rohrprofil bzw. aus einem metallischen, geschlossenen Hohlprofil hergestellt, das mit wenigstens einem separat hergestellten Kunststoffelement verbunden wird. Das Herstellen zweier separater Bauteile und schließlich das Verbinden dieser wenigstens zwei Bauteile führt zu erhöhtem Fertigungs- und Montageaufwand. Zum Verbinden des Rohrprofils bzw. Hohlprofils mit dem oder den Kunststoffelement(en) sind ferner zusätzliche Verbindungsmittel in Form von Schrauben, Muttern, Nieten o.ä. erforderlich, was in der Regel wiederum mehr Bauraum erfordert und zu höherem Gewicht des Verbundbauteils führt.

Vergleichbare, allein aus Kunststoff bestehende Verbundbauteile - d. h. sowohl Hohlprofil als auch Kunststoffelemente sind aus Kunststoff - zeigen bei vertretbarer Dimensionierung der Querschnitte geringere Festigkeiten und Steifigkeiten, aber auch Nachteile in der Energieaufnahme bei schlagartiger Beanspruchung, verglichen mit gleichartigen Bauteilen aus metallischen Werkstoffen.

DE 10 2014 019 724 A1 beschreibt ein Verfahren zur Herstellung von Strukturelementen aus Funktionselement und Faser-Kunststoff-Verbund-Hohlprofil bei dem durch wahlweise Abfolge des Einfügens eines konturgebenden Elements und des Einlegens eines Strukturelement Halbzeugs ein lokales Erwärmen des Faser-Kunststoff-Verbund-Hohlprofils im Bereich des Hinterschnitts des konturgebenden Elements durchgeführt wird.

US 2012/0189403 A1 betrifft einen mittels Insert-Moulding herzustellenden Gewindeeinsatz der einen Schaft umfasst, an dessen axialen Enden Flansche vorgesehen sind und diese zwei gegenüberliegende Köpfe abgrenzen. Mittel zum Blockieren des Einsatzes in Drehrichtung nach dem Einspritzen und Mittel zum Blockieren des Einsatzes axial in Translation nach dem Einspritzen sind auf der Außenseite des Schaftes angeordnet. Der Schaft weist mindestens einen schmelzbaren Bereich mit größerer axialer Verformbarkeit auf, der zwischen dem axialen Gewindeabschnitt und einer der axialen Stirnflächen angeordnet ist. Der Schmelzbereich ist so konfiguriert, dass mit einer axialen Druckkraft, die auf die axialen Stirnflächen des Gewindeeinsatzes ausgeübt wird, dieser auf ein kleineres axiales Längenmaß verpresst wird, ohne eine Verformung des axialen Gewindes zu verursachen.

WO 2009/077026 A1 beschreibt ein Verfahren zur Herstellung eines Verbundbauteils aus einem hohlen Profil und einem Spritzgusselement, wobei das Spritzgusselement an das Profil angespritzt wird, so dass das Profil in Umfangsrichtung unverlierbar umgriffen wird, und wobei am Profil zumindest ein Formschlusselement ausgebildet wird und das beim Anspritzen erfasst wird, indem das zwischen den Enden des Profils liegende Formschlusselement in Umfangsrichtung und Längserstreckung begrenzt aus- oder eingeformt wird.

Der Nachteil der in WO 2009/077026 A1 aufgezeigten Lösung liegt zum einen im sehr aufwändigen und kostspieligen Verfahren und zum anderen in den verfahrensbedingt erheblich eingeschränkten gestalterischen Möglichkeiten der mechanischen Verbindungen zwischen der spritzgegossenen Kunststoffkomponente und dem Profil.

Gemäß WO 2009/077026 A1 wird zunächst in einem Kombinationswerkzeug ein Innenhochdruckumformverfahren angewandt, bevor ein Spritzgießverfahren zum Anbringen der Spritzgusselemente angewandt wird. Durch die nacheinander stattfindende Kombination dieser beiden Verfahren, erst Innenhochdruck, danach Spritzgießen, in einem gemeinsamen Werkzeug ergibt sich eine Limitierung in der minimalen Dimension der Wanddicke des Profils, was einer Gewichtsreduktion im Sinne von modernem Leichtbau entgegen steht. Zusätzlich ergeben sich Einschränkungen in der Gestaltung der Verbindungsstelle zwischen den beiden Komponenten, die schließlich zu einer deutlichen Reduzierung der Schubfestigkeit und Schubsteifigkeit der Verbindung von spritzgegossener Komponente mit dem Profil führt. Da in WO 2009/077026 A1 die Verbindung auf einem Formschluss zwischen den beiden Komponenten beruht, lässt sich diese nur durch ein Umspritzen des Profils in Form eines Ringes - in WO 2009/077026 A1 als Umfangslamelle bezeichnet - ausführen. Die Breite einer solchen Umfangslamelle ist jedoch eingeschränkt und kann nur wenige Millimeter betragen, da es sonst während des Innenhochdruckumformverfahrens zu ungewollt hohen Verformungen der Profilwandung, bis hin zum Platzen der Profilwandung kommen kann. Eine Steigerung der Verbindungssteifigkeit bzw. Verbindungsfestigkeit von Profil und spritzgegossener Komponente kann gemäß WO 2009/077026 A1 deshalb nur durch eine Anordnung mehrerer solcher Umfangslamellen entlang des Profils erfolgen. Ein Mindestabstand von mehreren Millimetern Breite muss dabei zwischen zwei Umfangslamellen eingehalten werden. Dieser Abstand wird im Werkzeug durch Kerne generiert. Bei zu geringer Breite dieser Kerne besteht wiederum die Gefahr des Kernbruchs und des Platzens des Profils, da bei der Innenhochdruckumformung des Rohres die Rohrwandung sowohl radial aufgeweitet, als auch axial auf der Gravur verschoben wird und das Profil dabei möglichst großflächig abgestützt werden muss. Gemäß WO 2009/077026 A1 lässt sich daher auf einer Profilfläche X von 100% im Mittel nur ein Anteil von maximal 50% mit Kunststoff überspritzen.

Der vorliegenden Erfindung lag deshalb die Aufgabe zugrunde, ein Verfahren zur Herstellung von Verbundbauteilen bereitzustellen, bei dem ein toleranzbehafteter, dünnwandiger Hohlprofilgrundkörper mit ausreichend Spiel widerstandsfrei in ein Spritzgieß bzw. Presswerkzeug eingebracht wird und dabei trotzdem eine Abdichtung wenigstens einer Kavität für eine auf den Hohlprofilgrundkörper aufzutragende Kunststoffschmelze sowie ggf. deren Verteilung um den Hohlprofilgrundkörper herum erzielt wird, die aufgetragene Kunststoffkomponente sich zudem mit der Außenseite des Hohlprofilgrundkörpers verbindet ohne dabei dessen gesamte Außenform zu verformen, wodurch eine radiale, als auch axiale formschlüssige, mechanisch steifere und höher belastbarere Verbundkomponente als nach dem Stand der Technik entsteht.

Dünnwandig im Sinne der vorliegenden Erfindung bedeutet vorzugsweise ein Verhältnis von Durchmesser eines erfindungsgemäß einzusetzenden Hohlprofils zu dessen Wanddicke im Bereich von 5:1 bis 300:1.

Spiel in Sinne der vorliegenden Erfindung bedeutet, dass das Kleinstmaß der Spritz- bzw. Presswerkzeugkavität, rechtwinklig zur Schließrichtung des Werkzeugs gesehen, immer größer, im Grenzfall auch gleich groß, wie das toleranzbehaftete Außenmaß des Hohlprofilgrundkörperquerschnitts - ebenfalls rechtwinklig zur Schließrichtung des Werkzeuges gesehen - ist.

Zudem sollen erfindungsgemäß herzustellende Verbundbauteile die obengenannten Nachteile in der Fertigung oder Nachteile in den Festigkeits- und Steifigkeitseigenschaften und somit auch im Energieaufnahmeverhalten nicht aufweisen und ein hohes Maß an Funktionsintegration im Sinne der System- bzw. Modulbildung bei wirtschaftlicher Fertigung ermöglichen.

**Erfindung**

Die Lösung der Aufgabe ist ein Verfahren zur Herstellung eines Verbundbauteils durch

a) Bereitstellen eines Press- oder Gießwerkzeugs mit wenigstens einer zu öffnenden Kavität und einem Werkzeugmaß A in Schließrichtung und einem Werkzeugmaß B rechtwinklig zur Schließrichtung,

b) Bereitstellen wenigstens eines Metallrohres in Form eines Hohlzylinders als Hohlprofilgrundkörper mit einem Verhältnis von Durchmesser zu Wanddicke im Bereich von 5:1 bis 300:1, dessen Außenmaß C um einen Bereich von 0,1 bis 5% größer ist als das Werkzeugmaß A, und dessen Außenmaß D um einen Bereich von 0,1 bis 5% kleiner ist, als das Werkzeugmaß B und die Angaben zu C und D sich auf 90° in Richtung zur Längsachse des Hohlprofilgrundkörpers gesehen beziehen,

c) Bereitstellen wenigstens eines Stützelements, dessen Außenmaß oder Außenquerschnittsform kongruent dem Innenmaß oder der Innenquerschnittsform des Hohlprofilgrundkörpers entspricht,

d) Einbringen und Positionieren des wenigstens einen Stützelements innerhalb des wenigstens einen Hohlprofilgrundkörpers an den Positionen, an denen außerhalb des Hohlprofilgrundkörpers der Auftrag von Kunststoff erfolgen wird, sowie Fixieren desselben,

e) Einlegen des wenigstens ein Stützelement enthaltenden Hohlprofilgrundkörpers in die wenigstens eine Kavität des Spritzgieß- oder Presswerkzeugs,

f) Schließen der wenigstens einen Kavität des Spritzgieß- oder Presswerkzeugs und Verpressen des Hohlprofilgrundkörpers in Schließrichtung der wenigstens einen Kavität,

g) äußeres Auftragen von Kunststoff in Form einer Schmelze auf den Hohlprofilgrundkörper und Verformung des Hohlprofilgrundkörpers,

h) Abkühlen der auf den Hohlprofilgrundkörper in g) aufgebrachten Kunststoffschmelze (Solidifikation), und

i) Entnehmen des fertigen Verbundbauteils aus dem Spritzgießwerkzeug.

Überraschenderweise erlaubt das erfindungsgemäße Verfahren die Herstellung von Verbundbauteilen aus einem Hohlprofilgrundkörper mit einer äußerlich aufgebrachten Kunststoffkomponente in einem Spritzgieß- bzw. Presswerkzeug, ohne die Verwendung einer werkzeugtechnischen Operation oder die Verwendung eines Innendrucks, um eine Abdichtung zwischen dem erfindungsgemäß einzusetzenden, toleranzbehafteten Hohlprofilgrundkörper und dem Spritzgieß- oder Presswerkzeug herzustellen, gleichfalls aber genügend Unterstützung derart bereitzustellen, dass die äußerlich aufgebrachte Kunststoffkomponente formschlüssig, schubfest und schubsteif mit dem Hohlprofilgrundkörper verbunden wird, indem von einem Außenflächenabschnitt des Hohlprofilgrundkörpers von X = 100%, mehr als 50%, vorzugsweise 75 bis 100%, besonders bevorzugt 90 bis 100%, mit Kunststoff verbunden werden, vorzugsweise durch Anspritzen, Umspritzen, Überspritzen, Anpressen oder Umpressen.

Die vorliegende Erfindung betrifft deshalb auch ein Verbundbauteil enthaltend wenigstens einen Hohlprofilquerschnitt aufweisenden Grundkörper - hiernach Hohlprofilgrundkörper - und wenigstens ein, mit dem Hohlprofilgrundkörper an diskreten Verbindungsstellen formschlüssig verbundenes Kunststoffelement, sowie wenigstens ein innerhalb des Hohlprofilgrundkörpers an den diskreten Verbindungsstellen des außerhalb aufgebrachten, wenigstens einen Kunststoffelements positioniertes Stützelement, und der Hohlprofilgrundkörper weist ein Durchmesser/Wanddickenverhältnis im Bereich von 5:1 bis 300:1 auf.

Durch das erfindungsgemäße Verfahren erhält man ein Verbundbauteil erhältlich durch

a) Bereitstellen eines Press- oder Gießwerkzeugs mit wenigstens einer zu öffnenden Kavität und einem Werkzeugmaß A in Schließrichtung und einem Werkzeugmaß B rechtwinklig zur Schließrichtung,

b) Bereitstellen wenigstens eines Metallrohres in Form eines Hohlzylinders als Hohlprofilgrundkörper mit einem Verhältnis von Durchmesser zu Wanddicke im Bereich von 5:1 bis 300:1, dessen Außenmaß C um einen Bereich von 0,1 bis 5% größer ist als das Werkzeugmaß A, und dessen Außenmaß D um einen Bereich von 0,1 bis 5% kleiner ist als das Werkzeugmaß B und die Angaben zu C und D sich auf 90° in Richtung zur Längsachse des Hohlprofilgrundkörpers gesehen beziehen,

c) Bereitstellen wenigstens eines Stützelements, dessen Außenmaß oder Außenquerschnittsform kongruent dem Innenmaß oder der Innenquerschnittsform des Hohlprofilgrundkörpers entspricht,

d) Einbringen und Positionieren des wenigstens einen Stützelements innerhalb des wenigstens einen Hohlprofilgrundkörpers an den Positionen, an denen außerhalb des Hohlprofilgrundkörpers der Auftrag von Kunststoff erfolgen wird, sowie Fixieren desselben,

e) Einlegen des wenigstens ein Stützelement enthaltenden Hohlprofilgrundkörpers in die wenigstens eine Kavität des Spritzgieß- oder Presswerkzeugs,

f) Schließen der wenigstens einen Kavität des Spritzgieß- oder Presswerkzeugs und Verpressen des Hohlprofilgrundkörpers in Schließrichtung der wenigstens einen Kavität,

g) äußeres Auftragen von Kunststoff in Form einer Schmelze auf den Hohlprofilgrundkörper und Verformung des Hohlprofilgrundkörpers durch den Spritz- oder Pressdruck,

h) Abkühlen der auf den Hohlprofilgrundkörper in g) aufgebrachten Kunststoffschmelze (Solidifikation), und

i) Entnehmen des fertigen Verbundbauteils aus dem Spritzgießwerkzeug.

Zwar müssen erfindungsgemäß Stützelemente in einem vorgelagerten Schritt hergestellt werden, aber diese erfordern - da innerhalb des wenigstens einen Hohlprofilgrundkörpers positioniert - keinen zusätzlichen Bauraum. Der Verbleib des Stützelements bzw. der Stützelemente kann deshalb zunächst ein Zusatzgewicht für das Enderzeugnis - dem Verbundbauteil - bedeuten, jedoch am Ende des Prozesses zu einem geringeren Gewicht führen, insbesondere wenn deshalb Hohlprofilgrundkörper mit geringeren Wanddicken eingesetzt werden können, oder aber Stützelement(e) durch nachträgliches Entfernen, insbesondere durch Ausschmelzen, wieder aus dem Hohlprofilgrundkörper entfernt werden.

Erfindungsgemäß wird die im erfindungsgemäßen Verfahren entstehende Form bzw. Strukturierung der Wandung des Hohlprofilgrundkörpers und somit die Wandung der Verbindungsfläche der beiden Komponenten des Verbundbauteils über die Gestalt des wenigstens einen Stützelements definiert bzw. gesteuert. Es entsteht eine formschlüssige Verbindung/Verzahnung von Hohlprofilgrundkörper und angespritztem Kunststoff mit der Blockierung aller Freiheitsgrade, translatorisch in X-, Y- und Z-Richtung und rotatorisch um die X-, Y- und Z-Achse und somit eine schubfeste und schubsteife Verbindung wenigstens in axialer, vorzugsweise in axialer und radialer Richtung, bezogen auf den Hohlprofilgrundkörper.

Entfernt man nach dem Verfahrensschritt i) das wenigstens eine Stützelement aus dem Innern des Hohlprofilgrundkörpers in einem zusätzlichen Verfahrensschritt j), so erhält man in einer Ausführungsform der vorliegenden Erfindung Verbundbauteile ohne Stützelement(e).

Zur Klarstellung sei angemerkt, dass alle aufgeführten, allgemeinen oder in Vorzugsbereichen genannten Definitionen und Parameter in beliebigen Kombinationen umfasst sind. Im Rahmen dieser Anmeldung zitierte Normen gelten in der zum Anmeldetag gültigen Fassung.

Verpressen gemäß der Verfahrensschritte d), e) und f) bedeutet ein Verformen bei dem keine Umfangserweiterung sondern nur eine Formänderung herbeigeführt wird. Bei einem toleranzbedingten Übermaß des Hohlprofilumfangs wird ebenfalls hauptsächlich eine Formänderung herbeigeführt, jedoch wird es gegen Ende der Werkzeugschließbewegung eine geringfügige Umfangsverringerung geben."

Die Schubfestigkeit ist eine Stoffkonstante, die den Widerstand eines Werkstoffs gegen Abscherung beschreibt, also gegen eine Trennung durch Kräfte, die zwei einander anliegende Flächen längs zu verschieben suchen. Die Schubfestigkeit wird bestimmt durch den Schubmodul, auch Gleitmodul genannt. Schubfest miteinander verbunden bedeutet im Sinne der vorliegenden Erfindung eine in axialer Richtung, vorzugsweise in axialer und radialer Richtung, des Hohlprofilgrundkörpers schubsteife, formschlüssige Verbindung des Hohlprofilgrundkörpers mit wenigstens einem auf dem Hohlprofilgrundkörper aufgebrachten Kunststoffelement.

Die Schubsteifigkeit ist das Produkt aus dem Schubmodul G eines Werkstoffs und der Querschnittsfläche *A*. Es gilt:

$$\text{Schubsteifigkeit} = G \cdot A \cdot \kappa \ ( = G \cdot A_s)$$

Der querschnittsabhängige Korrekturfaktor $\kappa$ berücksichtigt dabei die über den Querschnitt ungleichförmige Verteilung der Schubspannung $T$. Oft wird die Schubsteifigkeit auch mithilfe der Schubfläche $A_s$ ausgedrückt. Siehe: **https://de.wikipedia.org/wiki/Steifigkeit.**

Formschlüssige Verbindungen im Sinne der vorliegenden Erfindung entstehen durch das Ineinandergreifen von mindestens zwei Verbindungspartnern, die eine nichtlösbare Verbindung miteinander eingehen und sich nur durch Zerstören voneinander wieder trennen. Siehe: **https://de.wikipedia.org/wiki/Verbindungstechnik.**

**Bevorzugte Ausführungsformen der Erfindung**

In einer bevorzugten oder alternativen Ausführungsform wird während oder nach Verfahrensschritt d) wenigstens eine Sicke, vorzugsweise mehrere Sicken, von außen in die Wandung des Hohlprofilgrundkörpers im Bereich des wenigstens einen Stützelements eingebracht, vorzugsweise exakt an der Position des wenigstens einen Stützelements.

In einer bevorzugten oder alternativen Ausführungsform wird vor, während oder nach Verfahrensschritt b) wenigstens ein Loch oder eine Bohrung, bevorzugt mehrere Löcher bzw. Bohrungen, von außen in die Wandung des Hohlprofilgrundkörpers im Bereich des wenigstens einen Stützelements eingebracht, vorzugsweise exakt an der Position des wenigstens einen Stützelements.

In einer bevorzugten oder alternativen Ausführungsform wird während oder nach Verfahrensschritt d) wenigstens ein Loch oder Bohrung, bevorzugt mehrere Löcher oder Bohrungen, von außen in die Wandung des Hohlprofilgrundkörpers im Bereich des wenigstens einen Stützelements eingebracht, vorzugsweise exakt an der Position des wenigstens einen Stützelements.

In diesen drei letztgenannten Ausführungsformen ist ein Verformen der Wandung des Hohlprofilgrundkörpers über den Spritzdruck, wie in Verfahrensschritt g) beschrieben, nicht mehr notwendig, um eine formschlüssige, schubfeste und schubsteife Verbindung in wenigstens axialer Richtung des Hohlprofilgrundkörpers, vorzugsweise in axialer und radialer Richtung des Hohlprofilgrundkörpers, zwischen dem Hohlprofilgrundkörper und dem Kunststoffauftrag, vorzugsweise der Kunststoffanspritzung oder der Kunststoffanpressung, zu generieren.

Ein erfindungsgemäß einzusetzender Hohlprofilgrundkörper kann deshalb sowohl eine Vielzahl Sicken, als auch eine Vielzahl Löcher bzw. Bohrungen aufweisen.

In einer weiteren bevorzugten oder alternativen Ausführungsform wird nach dem Verfahrensschritt d) und vor dem Verfahrensschritt e) wenigstens ein Kunststoffschmelzevolumen in wenigstens einer für diese Zwecke vorgesehenen Kavität im Spritzgießwerkzeug oder Presswerkzeug abgelegt und im Verfahrensschritt f) durch Schließen des Spritzgieß- oder Presswerkzeugs das Kunststoffschmelzevolumen lokal verpresst und von außen gegen die Wandung des Hohlprofilgrundkörpers sowie gleichzeitig gegen das im Hohlprofilgrundkörper positionierte wenigstens eine Stützelement angepresst, oder um den Hohlprofilgrundkörper herum gepresst.

In einer weiteren bevorzugten oder alternativen Ausführungsform wird nach dem Verfahrensschritt h) ein zusätzliches Innenhochdruckverfahren (**IHU**) zur Formänderung des Hohlprofilgrundkörpers an den Positionen angewendet, an denen sich kein Stützelement und auch kein Kunststoffauftrag befindet. Siehe: **https://de.wikipedia.org/wiki/Innenhochdruckumformen.**

In einer weiteren bevorzugten oder alternativen Ausführungsform wird nach dem Verfahrensschritt i) der Hohlprofilgrundkörper an wenigstens einer Position durch das Einwirken zusätzlicher Biegekräfte an Positionen, an denen sich kein Stützelement und auch kein Kunststoffauftrag befindet, verformt. Vorzugsweise lässt man zusätzliche Biegekräfte einwirken, wenn die endgültige Verbundbauteilform von der eines geraden Hohlprofilgrundkörpers abweicht.

In einer weiteren bevorzugten oder alternativen Ausführungsform wird nach dem Verfahrensschritt d) und vor dem Verfahrensschritt e) der Hohlprofilgrundkörper an wenigstens einer Position durch das Einwirken zusätzlicher Biegekräfte verformt. Diese Verformung lässt sich außerhalb des Werkzeugs an jeder beliebigen Position des Hohlprofilgrundkörpers durchführen. Vorzugsweise lässt man zusätzliche Biegekräfte einwirken, wenn die endgültige Verbundbauteilform von der eines geraden Hohlprofilgrundkörpers abweicht. Die Verformung kann sowohl an Positionen an denen sich innerhalb des Hohlprofilgrundkörpers ein Stützelement befindet, als auch an Positionen an denen sich kein Stützelement im Innern des Hohlprofilgrundkörpers befindet durchgeführt werden. Falls die Biegung im Bereich der Position eines Stützelements durchgeführt wird, kann das Stützelement die Hohlprofilwandung stützen und die Querschnittsform an dieser Position wenig verformt halten.

In einer weiteren bevorzugten oder alternativen Ausführungsform wird die Verbindung von Hohlprofilgrundkörper und angespritztem Kunststoff mit der Blockierung aller Freiheitsgrade, translatorisch in X-, Y- und Z-Richtung und rotatorisch um die X-, Y- und Z-Achse mittels einer Oberflächenbehandlung der äußeren Wandung des Hohlprofilgrundkörpers zusätzlich unterstützt. Diese Oberflächenbehandlung erfolgt vorzugsweise vor wenigstens einem der Verfahrensschritte b), c), d) oder e).

Bevorzugte Formen der Oberflächenbehandlung sind der Auftrag wenigstens eines Haftvermittlers, eine Plasma-Oberflächenaktivierung, eine Laserstrukturierung, eine chemische Vorbehandlung oder ein additives Auftrageverfahren.

Bevorzugte chemische Vorbehandlungsmittel sind der Einsatz von Säuren oder Basen. Bevorzugtes additives Auftragsverfahren ist das thermische Metalllaufspritzverfahren. Siehe: **https://de.wikipedia.org/wiki/Thermisches_Spritzen.**

**Verfahrensschritt a)**

Verfahrensschritt a) betrifft das Bereitstellen eines Press- oder Gießwerkzeugs mit wenigstens einer zu öffnenden Kavität und einem Werkzeugmaß A in Schließrichtung und einem Werkzeugmaß B rechtwinklig zur Schließrichtung des Werkzeugs. Die Schließrichtung bezieht sich erfindungsgemäß auf das einzusetzende Press- oder Spritzgießwerkzeug. Vorzugsweise weist ein erfindungsgemäß einzusetzendes Spritzgieß- oder Presswerkzeug zwei Werkzeughälften auf. Je nach Ausgestaltung des zu fertigenden Verbundbauteils können aber die Werkzeughälften wiederum aus mehreren Segmenten bestehen. Der Fachmann wird die Auslegung des einzusetzenden Spritzgieß- oder Presswerkzeugs entsprechend dem zu fertigenden Verbundbauteil anpassen. Eine Zusammenfassung erfindungsgemäß einzusetzender Spritzgieß- oder Presswerkzeuge sowie zu Herstellern derselben findet sich u.a. in W. Michaeli, G. Menges, P. Mohren, Anleitung zum Bau von Spritzgießwerkzeugen, 5. Völlig überarbeitete Auflage, Carl Hanser Verlag München Wien 1999 (englische Ausgabe 2001**).**

Vorzugsweise weist ein erfindungsgemäß einzusetzendes Spritzgieß- oder Presswerkzeug folgende Merkmale auf, damit sich ein Hohlprofilgrundkörper mit all seinen Maß- und Formtoleranzen ohne Zwang in das Press- oder Spritzgießwerkzeug einlegen lässt:

I. Das Spritzgieß- oder Presswerkzeug muss so beschaffen sein, das es die Spritzgieß- oder Presskavitäten zu den Bereichen des Hohlprofilgrundkörpers, in denen in Verfahrensschritt g) kein Auftrag von Kunststoff erfolgen wird, beim Schließen des Werkzeugs abdichtet. Dazu sind im Spritzgieß- oder Presswerkzeug an den axialen Enden der Spritzgieß- bzw. Presskavitäten Kontaktflächen im Werkzeug notwendig, die den Hohlprofilgrundkörper während des Schließens des Werkzeugs von dessen Hohlprofilgrundkörperaußenmaß C auf das Werkzeugmaß A verpressen, wodurch sich gleichzeitig das Hohlprofilgrundkörperaußenmaß D auf das Werkzeugmaß B ändert.

II. In einer Ausführungsform sind die Kontaktflächen der wenigstens zwei Werkzeughälften zum Hohlprofilgrundkörper im Spritzgieß- oder Presswerkzeug so ausgeführt, dass der Hohlprofilgrundkörper über die in I. beschriebene Verpressung hinaus in eine Form um einen Bereich von - 0,01 bis -1% von Werkzeugmaß A und Werkzeugmaß B zusätzlich verpresst wird.

III. Die in I. und II. genannten Kontaktflächen der wenigstens zwei Werkzeughälften im Spritzgieß- oder Presswerkzeug umfassen den Hohlprofilgrundkörper bei geschlossenem Werkzeug in seinem gesamten Umfang und weisen vorzugsweise eine Breite, d. h. eine Ausdehnung in axialer Richtung des Hohlprofilgrundkörpers gesehen, im Bereich von 1,0 bis 10,0 mm auf.

IV. In einer Ausführungsform sind die Kontaktflächen der wenigstens zwei Werkzeughälften zum Hohlprofilgrundkörper im Spritzgieß- oder Presswerkzeug so ausgeführt, dass diese Bereiche im Werkzeug durch gehärtete Einsätze dargestellt werden. Vorzugsweise weisen die gehärteten Einsätze eine Härte nach Rockwell im Bereich von 50 bis 62 HRC auf. Damit liegt die Härte im Bereich üblicher Biege- und Stanzwerkzeuge. Siehe: **https://de.wikipedia.org/wiki/Rockwell_(Einheit).**

V. Das Spritzgieß- oder Presswerkzeug muss zwischen seinen Kontaktflächen außerhalb der Spritz- oder Presskavitäten einen Freiraum um den Hohlprofilgrundkörper herum bieten. Vorzugsweise beträgt bzw. liegt dieser Freiraum im Bereich von 1,0 bis 10,0 mm.

**Verfahrensschritt b)**

Im Verfahrensschritt b) wird wenigstens ein Metallrohr in Form eines Hohlzylinders als Hohlprofilgrundkörper mit einem Verhältnis von Durchmesser zu Wanddicke im Bereich von 5:1 bis 300:1, dessen Hohlprofilgrundkörperaußenmaß C um einen Bereich von 0,1 bis 5% größer ist, als das Werkzeugmaß A der Kavität und dessen Hohlprofilgrundkörperaußenmaß D um einen Bereich von 0,1 bis 5% kleiner ist, als das Werkzeugmaß B der Kavität, bereitgestellt. Erfindungsgemäß beziehen sich die Angaben zu den Hohlprofilgrundkörper-Außenmaßen C und D des in b) bereitzustellenden Hohlprofilgrundkörpers auf 90° in Richtung zur Längsachse des Hohlprofilgrundkörpers gesehen.

Vorzugsweise betreffen die Angaben zu den Hohlprofilgrundkörperaußenmaßen C und D auf die in f) genannte Position bzw. Positionen der lokalen Verpressung am im Verfahrensschritt b) bereitzustellenden Hohlprofilgrundkörper, an denen sich die axialen Enden des wenigstens einen, in Verfahrensschritt c) bereitzustellenden und in Verfahrensschritt d) in den Hohlprofilgrundkörper einzuführenden und zu positionierenden Stützelements, befinden.

Ein erfindungsgemäß einzusetzender Hohlprofilgrundkörper kann nach verschiedenen Verfahren hergestellt werden, verschiedene Querschnittsformen aufweisen. Vorzugsweise wird zu dessen Herstellung wenigstens eine der Techniken Strangpressen, Strangziehen, Extrudieren, Nahtlosziehen, Längsschweißen, Spiralschweißen, Wickeln und Pultrusion eingesetzt. Ein erfindungsgemäß einzusetzender dünnwandiger Hohlprofilgrundkörper kann dabei einen kreisrunden, elliptischen, oder polygonförmigen - dreieckigen, viereckigen, fünfeckigen .... bis hin zu einem vieleckigen - Querschnitt aufweisen.

Vorzugsweise weist ein in Verfahrensschritt b) bereitzustellender Hohlprofilgrundkörper eine Wanddicke im Bereich von 0,1 bis 10,0mm auf. Ein erfindungsgemäß einzusetzender Hohlprofilgrundkörper weist vorzugsweise wenigstens zwei Öffnungen, jeweils eine an den Stirnseiten, auf.

Zur Herstellung erfindungsgemäß einzusetzender Hohlprofilgrundkörper wird wenigstens ein Material aus der Gruppe Metalle oder Legierungen, eingesetzt.

Bevorzugte Metalle sind Stahl, Aluminium, Magnesium, Titan, Zinn, Zink, Blei, Silber, Gold, Messing oder Legierungen. Insbesondere bevorzugt werden Hohlprofilgrundkörper aus Aluminium oder Stahl, insbesondere aus Stahl, eingesetzt.

**Verfahrensschritt c)**

Verfahrensschritt c) betrifft das Bereitstellen wenigstens eines Stützelements, dessen Außenmaß oder Außenquerschnittsform kongruent dem Innenmaß oder der Innenquerschnittsform des Hohlprofilgrundkörpers entspricht. Insbesondere erfolgt Verfahrensschritt c) mit der Maßgabe, dass der Umfang des Hohlprofilgrundkörpers keine Aufweitung erfährt.

Kongruent bedeutet in Verfahrensschritt c), dass die Form und die Abmessungen der nach außen gerichteten Flächen eines Stützelements der Form und den Abmessungen den nach innen gerichteten Flächen eines erfindungsgemäß einzusetzenden Hohlprofilgrundkörpers so weit wie möglich entsprechen. Dadurch haben die Innenfläche eines erfindungsgemäß einzusetzenden Hohlprofilgrundkörpers und die Außenfläche eines erfindungsgemäß einzusetzenden Stützelements vorzugsweise entlang ihrer gemeinsamen Kontaktfläche(n) etwa gleiche Abstände zueinander. Vorzugsweise sind Stützelemente, die auch in ihren Außenkonturen möglichst allseitig der Innenform eines erfindungsgemäß einzusetzenden Hohlprofilgrundkörpers entsprechen und dabei einen etwa kongruenten Aufbau zur Innenwandung des Hohlprofilgrundkörpers aufweisen.

Vorzugsweise betrifft die Kongruenz das Innenmaß oder die Innenquerschnittsform des in b) bereitgestellten wenigstens einen Hohlprofilgrundkörpers.

Etwa gleiche Abstände bedeuten herstellungstoleranzbedingte Abweichungen in der Kongruenz im Bereich von -1,5 bis +3% zwischen dem Außenmaß oder der Außenquerschnittsform eines Stützelements und dem Innenmaß oder der Innenquerschnittsform eines erfindungsgemäß einzusetzenden Hohlprofilgrundkörpers. Von höchster Bedeutung für die Herstellung des Verbunds zwischen einem dünnwandigen Hohlprofilgrundkörper und einer vorzugsweise mittels Spritzguss bzw. Pressen im Verfahrensschritt g) aufzutragenden Kunststoffkomponente ist die besondere Form bzw. Gestalt eines Stützelementes. Ein erfindungsgemäß einzusetzendes Stützelement dient in erster Linie der inneren Abstützung der dünnen Hohlprofilgrundkörperwand.

Ohne den Einsatz wenigstens eines Stützelements würde ein erfindungsgemäß einzusetzender, dünnwandiger Hohlprofilgrundkörper durch den Spritzdruck bzw. Pressdruck des im Verfahrensschritt g) anzuwendenden Spritzgießverfahren oder Pressverfahren zusammengedrückt werden. Ein erfindungsgemäß einzusetzendes Stützelement muss in einer dem Innenquerschnitt eines einzusetzenden Hohlprofilgrundkörpers in der in Verfahrensschritt c) beschriebenen angepassten Form oder Gestaltung vorliegen. Da dem Fachmann aufgrund der späteren Aufgabe des Verbundbauteils die Form und Ausgestaltung eines in Verfahrensschritt b) bereitzustellenden Hohlprofilgrundkörpers bekannt ist, wird dieser entsprechend geeignete Stützelemente im Verfahrensschritt c) bereitstellen.

Beim Design, dem Material und sonstigen Ausgestaltungsmerkmalen eines in Verfahrensschritt c) bereitzustellenden Stützelements wird der Fachmann sich an den drei Aufgaben eines Stützelements orientieren:

1. Einzusetzende Stützelemente müssen die Hohlprofilgrundkörperwandung gegen Kollabieren des Hohlprofilquerschnitts während des Kunststoffauftrags in Verfahrensschritt g) und im Bereich des aufzutragenden Kunststoffs abstützen;

2. Einzusetzende Stützelemente stellen quasi die Negativform für den Umformbereich der Hohlprofilgrundkörperwandung im Bereich des in Verfahrensschritt g) aufzutragenden Kunststoffs dar;

3. gegebenenfalls dienen einzusetzende Stützelemente als Stützen der Flächen der Hohlprofilgrundkörperwandung, an der oder den Position(en), an denen sich die axialen Enden eines im Hohlprofilgrundkörper positionierten Stützelements befinden, und dienen der Abdichtung der Kavität des aufzutragenden Kunststoffs. Je nach Material der Hohlprofilgrund-körperwandung kann allerdings auch schon die eigene Stützwirkung derselben ausreichend sein.

Ein in Verfahrensschritt c) bereitzustellendes Stützelement dient aber auch als Gegenlager zu einer strukturierten Wandung eines Hohlprofilgrundkörpers, die durch den Spritz- oder Pressdruck der Kunststoffkomponente erzeugt wird.

Ein erfindungsgemäß einzusetzendes Stützelement ist vorzugsweise exakt an der Stelle im Inneren eines Hohlprofilgrundkörpers zu positionieren, an der der Auftrag der Kunststoffkomponente auf die äußere Wandung des Hohlprofilgrundkörpers im Verfahrensschritt g) erfolgt. Vorzugsweise erfolgt dieser Auftrag durch Anspritzung, durch Umspritzung, durch Anpressung oder durch Umpressung.

Ein erfindungsgemäß einzusetzendes Stützelement ist vorzugsweise derart gestaltet, dass es

1. ein Fixieren des Hohlprofilgrundkörpers im Verfahrensschritt d) durch lokale äußere Krafteinwirkung des Presswerkzeugs oder des Spritzgießwerkzeugs, vorzugsweise auf die Hohlprofilgrundkörperaußenwandung, und/oder ein Biegen des Hohlprofilgrundkörpers zulässt und den Hohlprofilgrundkörper dabei in der Art unterstützt, dass dieser nicht während des Biegens einknickt;

2. einen ausreichenden Gegendruck während des Schließens des Spritzgießwerkzeugs oder des Presswerkzeugs aufbaut und eine Abdichtung der Spritzgießkavität gewährleitstet; optional dabei die Flächen der Hohlprofilgrundkörperwandung, an der Position oder an den Positionen, an denen sich die axialen Enden des wenigstens einen, im Hohlprofilgrundkörper positionierten Stützelements befinden, und die der Abdichtung der Kavität des aufgetragenen Kunststoffs dienen, stützt, sofern nicht die eigene Stützwirkung der Hohlprofilgrundkörperwandung ausreicht;

3. eine ausreichende Stabilität des dünnwandigen Hohlprofilgrundkörpers während des Einspritzvorgangs des thermoplastischen Kunststoffs gewährleistet und ein Zusammendrücken des Querschnitts des Hohlprofilgrundkörpers, vorzugsweise des rohrförmigen Querschnitts des Hohlprofilgrundkörpers, verhindert (Hauptfunktion);

4. eine derartige Struktur aufweist, dass lokale Deformationen des dünnwandigen Hohlprofilgrundkörpers durch den Spritzdruck oder Pressdruck der thermoplastischen Kunststoffschmelze, oder durch einen vorangestellten Pressvorgang mit soliden Stempeln, erzielt werden können;

5. eine wie in 4. beschriebene Deformation in der Art generiert wird, dass letztendlich nach dem Auftrag der Kunststoffkomponente auf die äußere Wandung des Hohlprofilgrundkörpers, vorzugsweise in Form von Anspritzen, Umspritzen, Anpressen oder Umpressen, mit der Kunststoffkomponente eine steife, hochbelastbare und dauerhaft haltbare formschlüssige Verbindung zwischen Hohlprofilgrundkörper und der Kunststoffkomponente entsteht; und

6. ein möglichst geringes Gewicht im Bereich von 1 bis 1000g aufweist und kostengünstig ist, für den Fall, dass das Stützelement nach dem Verfahrensschritt i) im Hohlprofil verbleibt.

Im bevorzugten Fall, dass der Hohlprofilgrundkörper die Form eines Rohres bzw. Röhrenform mit einem elliptischen Querschnitt mit einem kleinen Hohlprofilgrundkörper-Außenmaß D und einem großen Hohlprofilgrundkörper-Außenmaß C aufweist, wird bevorzugt wenigstens ein zylinderförmiges Stützelement mit einem ebenso elliptischen Querschnitt innerhalb des Hohlprofilgrundkörpers positioniert.

Im Falle, dass das erfindungsgemäße Verfahren zusammen mit einem IHU-Verfahren kombiniert wird, sind in Verfahrensschritt c) vorzugsweise Stützelemente mit einem durchgehenden Loch einzusetzen, die den Fluss eines bei einem IHU-Verfahren zum Einsatz kommenden Fluids durch ein Stützelement ermöglichen. Besonders bevorzugt sind im Falle eines röhrenförmigen Hohlprofilgrundkörpers zylinderförmige Stützelemente mit einer Bohrung entlang ihrer Achse, sogenannte Hohlzylinder.

Ein erfindungsgemäß einzusetzendes Stützelement kann nach verschiedenen Verfahren hergestellt werden und aus verschiedenen Materialien bestehen. Vorzugsweise werden zur Herstellung erfindungsgemäß einzusetzender Stützelemente die Techniken Stanzen, Tiefziehen, Zusammenstecken, Schweißen, Löten, Nieten, Gießen, Druckgießen oder Spritzgießen angewandt.

Vorzugsweise wird zur Herstellung erfindungsgemäß einzusetzender Stützelemente wenigstens ein Material aus der Gruppe Metalle, thermoplastische Kunststoffe, duroplastische Kunststoffe und Keramik eingesetzt. Bevorzugte Metalle sind Stahl, Aluminium, Magnesium, Titan, Zinn, Wismut, Messing oder andere Legierungen.

Besonders bevorzugt wird ein in Verfahrensschritt c) bereitzustellendes Stützelement aus einem thermoplastischen Kunststoff hergestellt. Besonders bevorzugt wird als thermoplastischer Kunststoff ein Polyamid oder ein Polyester eingesetzt. Bevorzugt wird als Polyamid ein Polyamid 6 eingesetzt. Bevorzugt wird als Polyester ein Polyalkylenterephthalat eingesetzt, besonders bevorzugt Polybutylenterephthalat.

Ganz besonders bevorzugt wird ein in Verfahrensschritt c) bereitzustellendes Stützelement aus einem thermoplastischen Kunststoff mit wenigstens einem Füll- oder Verstärkungsstoff hergestellt. Bevorzugt werden als Füll- oder Verstärkungsstoff Glasfasern eingesetzt. Insbesondere bevorzugt werden auf 100 Massenanteile des thermoplastischen Kunststoffs 0,1 bis 85 Massenanteile Füll- oder Verstärkungsstoff eingesetzt. Erfindungsgemäß einzusetzende Stützelemente auf Basis thermoplastischer Kunststoffe werden in einem dem erfindungsgemäßen Verfahren vorgelagerten Schritt vorzugsweise durch Spritzgießen hergestellt.

Insbesondere bevorzugt wird ein in Verfahrensschritt c) bereitzustellendes Stützelement aus einem glasfaserverstärkten Polyamid 6 mit 15 bis 60 Massenanteilen Glasfasern auf 100 Massenanteile Polyamid im Spritzgießverfahren hergestellt.

Im Falle, dass ein in Verfahrensschritt c) bereitzustellendes Stützelement nach der Herstellung des Verbundbauteils aus diesem wieder entfernt werden soll, werden solche Stützelemente nach Beendigung des Verfahrensschritts i) in einem weiteren Verfahrensschritt j) ausgeschmolzen. Vorzugsweise werden in diesem Fall zur Herstellung geeigneter Stützelemente niedrigschmelzende Metalle oder Legierungen eingesetzt, die das erfindungsgemäße Verfahren überstehen, anschließend aber durch höhere Temperaturen, vorzugsweise durch Einwirken von Temperaturen im Bereich von 80 bis 220°C verflüssigt und aus dem Hohlprofilgrundkörper wieder entfernt werden können. Ein zu diesem Zweck einzusetzendes Stützelement besteht aus einem Metall oder einer Legierung, das bzw. die einen Schmelzpunkt unterhalb des Schmelzpunkts des in Verfahrensschritt g) aufzutragenden bzw. einzusetzenden Kunststoffs aufweist. Vorzugsweise werden Zinn-Wismut Legierungen eingesetzt. Aus DE 4124021 C2 ist eine Zinn-Wismut Legierung mit einem Schmelzpunkt von 138°C bekannt.

Erfindungsgemäß einzusetzende Stützelemente auf Basis thermoplastischer Kunststoffe werden in einem dem erfindungsgemäßen Verfahren vorgelagerten Schritt durch Spritzgießen hergestellt.

In einer Ausführungsform kann das wenigstens eine Stützelement ein Kunststoff-Metall-Hybrid sein, vorzugsweise ein zylinderförmiges Metallrohr mit aufgespritzten Kunststoffrippen. Die Kunststoff-Metall-Hybridtechnologie ist dem Fachmann bekannt, beispielsweise aus EP 0 370 342 A1**.**

**Verfahrensschritt d)**

Im Verfahrensschritt d) erfolgt das Einbringen und das exakte Positionieren eines in Verfahrensschritt c) bereitgestellten Stützelements innerhalb des wenigstens einen Hohlprofilgrundkörpers an den Positionen, an denen im Verfahrensschritt g) der Auftrag von Kunststoff erfolgen wird.

Dabei sind verschiedene Vorgehensweisen zur Einbringung eines Stützelements denkbar. Im Falle des Einsatzes mehrerer Stützelemente werden diese vorzugsweise gemeinsam oder aber einzeln nacheinander in deas in Verfahrensschritt b) bereitgestellte Metallrohr eingeschoben oder eingepresst.

In einer Ausführungsform wird durch eine zusätzliche lokale Umformung, vorzugsweise durch eine oder mehrere Sicken, die Fixierung eines Stützelements und damit die Fixierung der späteren Kunststoff/Hohlprofil-Verbindung vorgenommen.

**Verfahrensschritt e)**

Im Verfahrensschritt e) erfolgt das Einlegen eines Stützelement(e) enthaltenden Hohlprofilgrundkörpers in die wenigstens eine Kavität des Spritzgieß- oder Presswerkzeugs.

Neben der Gestaltung eines in Verfahrensschritt b) bereitzustellenden Hohlprofilgrundkörpers und neben der Gestaltung eines in Verfahrensschritt c) bereitzustellenden Stützelements und deren jeweiliger Querschnittsform(en) ist deshalb ebenso die Gestaltung eines in Verfahrensschritt a) bereitzustellenden Spritzgieß- oder Presswerkzeugs wichtig, damit das erfindungsgemäße Verfahren, insbesondere das Einlegen und das Abdichten der Spritzgieß- oder Presskavität, problemlos funktioniert.

Das Einlegen des Hohlprofilgrundkörpers in die Kavität erfolgt dabei im Gegensatz zum Stand der Technik **ohne** dass eine Aufweitung desselben erfolgt. Das Abdichten der Fuge zwischen dem Hohlprofilgrundkörper und der Kavität des Formwerkzeugs, die sich an den mit Kunststoffauftrag versehenen Hohlprofilgrundkörperabschnitt anschließt, erfolgt allein durch Formänderung des Umfangs des Hohlprofilgrundkörpers, wobei der Umfang selber gleich bleibt.

Im Falle des Einsatzes von Hohlprofilgrundkörpern mit rundem Umfang erfolgt eine Formänderung vorzugsweise zu einer Ellipse. Im Falle des Einsatzes von Hohlprofilgrundkörpern mit elliptischem Umfang erfolgt die Formänderung vorzugsweise zu einem runden Umfang.

Vorzugsweise liegt das Verhältnis des Umfangs des Hohlprofilgrundkörpers zum inneren Umfang der Werkzeugkavität des Formwerkzeugs im Bereich von 1 : 1 bis 1,1 : 1. Es ist für den Fachmann außerordentlich überraschend, dass selbst bei einem toleranzbedingten Übermaß des Umfangs des Hohlprofilgrundkörpers gegenüber dem inneren Umfang der Werkzeugkavität der Spalt bzw. die Fuge zuverlässig verschlossen und damit für den Spritzgießvorgang abgedichtet wird, und durch toleranzbedingtes Übermaß, bedingtes überschüssiges Material in die Trennebenen des Spritzgießwerkzeuges nicht hineingepresst wird. Diese Eigenschaft des erfindungsgemäßen Verfahrens, die Formänderung des Hohlprofilgrundkörpers mit dem Schließen des Formwerkzeugs, und damit gleichzeitig das Abdichten der Werkzeugkavität gegenüber der Hohlprofilgrundkörperaußenfläche erlaubt das direkt anschließende und örtlich begrenzte Auftragen von Kunststoff auf dem Hohlprofil, hier dargestellt als Verfahrensschritt g) und damit gegenüber dem Stand der Technik ohne zusätzlichen notwendigen Verfahrensschritt, daraus resultierend deutlich verkürzte Zykluszeiten.

Vorzugsweise weisen ein erfindungsgemäß einzusetzendes Spritzgieß- oder Presswerkzeug und auch ein erfindungsgemäß einzusetzender Hohlprofilgrundkörper folgende Merkmale auf, damit sich Letzterer mit all seinen Maß- und Formtoleranzen ohne Zwang in das in Verfahrensschritt a) bereitgestellte Werkzeug einlegen lässt:

    I. Das Spritzgieß- oder Presswerkzeug muss so beschaffen sein, das es die Spritzgieß- oder Presskavitäten zu den Bereichen des Hohlprofilgrundkörpers, in denen kein Auftrag von Kunststoff erfolgen wird, beim Schließen des Werkzeugs abdichtet. Dazu sind im Spritzgieß- oder Presswerkzeug an den axialen Enden der Spritzgieß- bzw. Presskavitäten Kontaktflächen im Werkzeug notwendig, die den Hohlprofilgrundkörper während des Schließens des Werkzeugs von dem Hohlprofilgrundkörperaußenmaß C auf das Werkzeugmaß A verpressen, wodurch sich gleichzeitig das Hohlprofilgrundkörperaußenmaß D auf das Werkzeugmaß B ändert.

II. In einer Ausführungsform sind die Kontaktflächen der wenigstens zwei Werkzeughälften zum Hohlprofilgrundkörper im Spritzgieß- oder Presswerkzeug so ausgeführt, dass der Hohlprofilgrundkörper über die in I. beschriebene Verpressung hinaus in eine Form um einen Bereich von - 0,01 bis -1% von Werkzeugmaß A und Werkzeugmaß B zusätzlich verpresst wird.

III. Die in I. und II. genannten Kontaktflächen der wenigstens zwei Werkzeughälften im Spritzgieß- oder Presswerkzeug umfassen den Hohlprofilgrundkörper bei geschlossenem Werkzeug in seinem gesamten Umfang und weisen vorzugsweise eine Breite, d. h. eine Ausdehnung in axialer Richtung des Hohlprofilgrundkörpers gesehen, im Bereich von 1,0 bis 10,0 mm auf

IV. In einer Ausführungsform sind die Kontaktflächen der wenigstens zwei Werkzeughälften zum Hohlprofilgrundkörper im Spritzgieß- oder Presswerkzeug so ausgeführt, dass diese Bereiche im Werkzeug durch gehärtete Einsätze dargestellt werden.

V. Vorzugsweise bietet das Spritzgieß- oder Presswerkzeug zwischen seinen Kontaktflächen außerhalb der Spritz- oder Presskavitäten einen Freiraum rund um den Hohlprofilgrundkörper herum. Vorzugsweise beträgt bzw. liegt dieser Freiraum im Bereich von 1,0 bis 10,0 mm.

Die in IV. zum Einsatz kommenden gehärteten Einsätze weisen vorzugsweise eine Härte nach Rockwell im Bereich von 50 bis 62 HRC auf. Damit liegt die Härte im Bereich üblicher Biege- und Stanzwerkzeuge.

Siehe: **https://de.wikipedia.org/wiki/Rockwell_(Einheit).**

**Verfahrensschritt f)**

Im Verfahrensschritt f) erfolgt das Schließen des Spritzgieß- oder Presswerkzeugs und das Verpressen des Hohlprofilgrundkörpers in Schließrichtung der wenigstens einen Kavität. Vorzugsweise erfolgt das Verpressen in Schließrichtung der wenigstens einen Kavität lokal an der oder den Position(en), an denen sich die axialen Enden wenigstens eines Stützelements befinden. Besonders bevorzugt erfolgt das Verpressen zudem an den unter Verfahrensschritt e) beschriebenen Kontaktflächen seitlich der Spritzgieß- bzw. Presskavität/en, wodurch die Spritzgieß- bzw. Presskavität/en abgedichtet werden.

Während des Schließens des Spritzgieß- bzw. Presswerkzeugs erfolgt ein leichtes Verpressen des Hohlprofilgrundkörpers gegen das wenigstens eine Stützelement und der Hohlprofilgrundkörper wird in die vom Spritzgieß- bzw. Presswerkzeug vorgegebene Form gebracht.

Mittels der unter Verfahrensschritt e) beschriebenen Kontaktflächen im Spritzgieß- bzw. Presswerkzeug wird im Verfahrensschritt f) der Hohlprofilgrundkörper eindeutig in dessen Kavität gehalten und die für das Spritzgießen bzw. für das Pressen vorgesehenen Kavitäten am Hohlprofil werden abgedichtet.

Für das Schließen des Spritzgieß- bzw. Presswerkzeugs wird eine Presskraft benötigt, die den Hohlprofilgrundkörper in eine durch die Ausgestaltung der Kavität des Spritzgieß- bzw. Presswerkzeugs definierte neue Form presst, sowie eine Schließkraft für den Spritzgießprozess, um die wenigstens eine Kavität abzudichten. Die Höhe der Presskraft richtet sich nach der Form eines in Verfahrensschritt b) bereitgestellten Hohlprofilgrundkörpers und nach der Form der bzw. des in Verfahrensschritt c) bereitgestellten Stützelemente(s). Ferner sind Gestalt, Dimensionen und Materialbeschaffenheit von Hohlprofilgrundkörper und Stützelement(e) für die Vorauskalkulation der anzuwendenden Presskraft entscheidend, die der Fachmann bei der Auslegung des erfindungsgemäßen Prozesses berücksichtigen muss.

Die Höhe der Schließkraft des Spritzgieß- bzw. Presswerkzeugs richtet sich nach der projizierten Fläche der durch den Kunststoffauftrag beabsichtigten Kunststoffumspritzungen bzw. Kunststoffpressungen und den Einspritzdrücken die benötigt werden, um die entsprechenden Kunststoffe im Verfahrensschritt g) einzuspritzen bzw. zu verpressen.

In einer Ausführungsform liegt die anzuwendende Presskraft unterhalb der Schließkraft des Spritzgießverfahrens.

Erfindungsgemäß bevorzugt erfolgt das Verpressen in Verfahrensschritt f) bis folgendes gilt: Hohlprofilgrundkörperaußenmaß C = Werkzeugmaß A. Dieses Maß stellt sich immer bei vollkommen geschlossenen Werkzeug ein. Hierbei entstehen keine Toleranzen.

Besonders bevorzugt erfolgt das Verpressen in Verfahrensschritt f) bis folgendes gilt: Hohlprofilgrundkörperaußenmaß C = Werkzeugmaß A und Hohlprofilgrundkörperaußenmaß D = Werkzeugmaß B. In diesem Fall ist die Kavität zum Hohlprofilgrundkörper umfänglich abgedichtet.

Tritt der Fall ein, dass das Hohlprofilgrundkörperaußenmaß C oder D zu klein ist und die Verformung durch das Werkzeug nicht ausreicht, um als Ergebnis Hohlprofilgrundkörperaußenmaß D = Werkzeugmaß B zu erreichen, so verbliebe ein Spalt. In diesem Fall müssen die Toleranzen des Hohlprofilgrundkörpers so gewählt werden, das dieser Fall nicht eintrifft.

Ist das Hohlprofilgrundkörperaußenmaß A zu groß gewählt, dann erreicht das Hohlprofilgrundkörperaußenmaß D das Werkzeugmaß B bevor das Werkzeug vollständig geschlossen ist, was zu einer tangentialen Stauchung der Hohlprofilgrundkörperwandung führt. Auch in diesem Fall sind deshalb die Toleranzen des Hohlprofilgrundkörpers so zu wählen, dass ein Stauchen maximal bis zur Druckdehnung des Materials eintritt, aber kein Ausweichen der Hohlprofilgrundkörperwandung in Hohlräume zwischen die Trennflächen des Spritzgieß- bzw. Presswerkzeugs eintritt.

**Verfahrensschritt g)**

Im Verfahrensschritt g) erfolgt der Auftrag von Kunststoff in Form einer Schmelze auf die Außenwandung des Hohlprofilgrundkörpers und Verformung des Hohlprofilgrundkörpers durch den Spritz- oder Pressdruck. Vorzugsweise erfolgt der Kunststoffauftrag nur im Bereich, d. h. lokal, des wenigstens einen, im Hohlprofilgrundkörper positionierten Stützelements und die Verformung des Hohlprofilgrundkörpers durch den Spritz- oder Pressdruck nur im Bereich des wenigstens einen, im Hohlprofilgrundkörper positionierten Stützelements. Vorzugsweise wird der Bereich eines Stützelements durch seine Ausmaße bestimmt zuzüglich eines Bereichs von bis zu 1 cm darüber hinaus. Die Verformung ist eine unmittelbare Folge des für den Kunststoffauftrag anzuwendenden Spritz- oder Pressdrucks. Wie stark die Verformung ausgeprägt ist, hängt von der Höhe des Drucks und der Wanddicke sowie vom Wandmaterial des Hohlprofilgrundkörpers ab, als auch von der Gestalt eines innerhalb des Hohlprofilgrundkörpers positionierten Stützelements bzw. dem Ausmaß und der Größe der Wandfläche, die nicht vom Stützelement unterstützt ist. Bei mehreren gleichartigen Stützelementen und vorausgesetzt der Druck ist entlang des Hohlprofilgrundkörpers ausreichend hoch und nahezu gleich, kann sich entlang des Hohlprofilgrundkörpers immer die gleiche Umformung einstellen. Die Formbegrenzung der Umformung wird durch das/die Stützelement(e) definiert.

Die in Verfahrensschritt g) anzuwendenden Drücke, Temperaturen und Volumina des Kunststoffauftrags sind zudem abhängig von den einzusetzenden Kunststoffmaterialien und der Geometrie der mit Kunststoff aufzufüllenden Kavität(en), die der Fachmann bei der Auslegung des erfindungsgemäßen Prozesses im Voraus berücksichtigen muss.

Durch das Verpressen des Hohlprofilgrundkörpers in f), insbesondere mittels der in Verfahrensschritt e) beschriebenen Werkzeugkontaktflächen, während des Schließens des Spritzgieß- bzw. Presswerkzeugs wird eine Abdichtung gegen Austreten des in g) aufzutragenden Kunststoffauftrags zwischen Kunststoffauftrag und nicht mit Kunststoffauftrag beaufschlagten Bereichen des Hohlprofilgrundkörpers in der Werkzeugkavität erzielt. In einer Ausführungsform sind die Werkzeugkontaktflächen so ausgeführt, dass diese Bereiche im Werkzeug durch gehärtete Einsätze dargestellt werden.

Die in Verfahrensschritt e) unter Punkt IV. beschriebene Ausführung gehärteter Werkzeugeinsätze dient im Verfahrensschritt f) und im Verfahrensschritt g) der Reduzierung des Verschleißes der Werkzeugkontaktflächen, da dies die einzigen Kontaktstellen zwischen Spritzgieß- bzw. Presswerkzeug und Hohlprofilgrundkörper sind und die gehärteten Werkzeugeinsätze vorzugsweise eine deutlich höhere Härte besitzen, als der Werkstoff des Hohlprofilgrundkörpers.

Während des lokalen Auftrags von Kunststoff auf den Hohlprofilgrundkörper im Verfahrensschritt g) baut das wenigstens eine Stützelement innerhalb des Hohlprofilgrundkörpers einen ausreichenden Gegendruck zu dem durch die Werkzeugkontaktflächen auf die äußere Wandung des Hohlprofilgrundkörpers erzeugten Druck auf und dichtet damit die Werkzeugkontaktflächen bzw. die Kavität gegen eventuell austretende Kunststoffmasse ab.

Der Auftrag von Kunststoff auf den wenigstens einen Hohlprofilgrundkörper erfolgt in Verfahrensschritt g) vorzugsweise durch Spritzgießen oder Formpressen, insbesondere Spritzgießen.

**Spritzgießen**

Nach DIN 8580 werden Fertigungsverfahren zur Herstellung geometrischer fester Körper in 6 Hauptgruppen unterteilt. Das Spritzgießen ist der Hauptgruppe 2, dem Urformen zugeordnet. Es eignet sich insbesondere für Massenartikel. Die Nacharbeit beim Spritzgießen ist gering bzw. kann ganz entfallen und selbst komplizierte Formen und Konturen können in einem Arbeitsgang gefertigt werden. Das Spritzgießen als Fertigungsverfahren in der Kunststoffverarbeitung ist dem Fachmann prinzipiell bekannt;
Siehe: **https://de.wikipedia.org/wiki/Spritzgie%C3%9Fen.**

Beim Spritzgießen wird mit einer Spritzgießmaschine der zu verarbeitende Kunststoff verflüssigt bzw. plastifiziert und in eine Form, dem Spritzgießwerkzeug, unter Druck eingespritzt. Im Werkzeug geht der Werkstoff durch Abkühlung oder durch eine Vernetzungsreaktion wieder in den festen Zustand über und wird nach dem Öffnen des Werkzeugs als Fertigteil entnommen. Der Hohlraum bzw. die Kavität eines Werkzeugs bestimmt dabei die Form und die Oberflächenstruktur des erstarrten Kunststoffauftrags im Enderzeugnis, in der vorliegenden Erfindung im Verbundbauteil. Es sind heute durch Spritzgießen Erzeugnisse im Gewichtsbereich von wenigen zehntel Gramm bis zu einer Größenordnung von 150 kg herstellbar.

Das Spritzgießen, insbesondere erweiterte spezielle Verfahren, erlaubt eine nahezu freie Wahl von Form und Oberflächenstruktur, insbesondere glatte Oberflächen, Narbungen für berührungsfreundliche Bereiche, Muster, Gravuren und Farbeffekte. Zusammen mit der Wirtschaftlichkeit macht dies das Spritzgießen zum weitverbreitetsten Verfahren zur Massenherstellung von Kunststoffteilen in praktisch allen Bereichen.

Eine Spritzgießapparatur umfasst wenigstens folgende Bauteile: 1. Schnecke 2. Einfülltrichter 3. Granulat 4. Plastifizierzylinder 5. Heizelemente 6. Werkzeug.

Innerhalb einer Spritzgießapparatur erfolgen die Schritte 1. Plastifizieren und Dosieren, 2. Einspritzen, 3. Nachdrücken und Abkühlen, und 4. Entformen.

## 1. Plastifizieren und Dosieren

Der thermoplastische Kunststoff rieselt in Form eines Granulats in die Gänge einer rotierenden Schnecke ein. Das Granulat wird in Richtung Schneckenspitze gefördert und durch die Wärme des Zylinders und die Friktionswärme, die beim Zerteilen und Scheren des Materials entsteht, erwärmt und aufgeschmolzen. Die Schmelze sammelt sich vor der Schneckenspitze, da die Austrittsdüse zunächst geschlossen ist. Da die Schnecke axial beweglich ist, weicht sie durch den Druck zurück und schraubt sich ähnlich einem Korkenzieher aus der Masse heraus. Die Rückwärtsbewegung wird durch einen Hydraulikzylinder oder elektrisch gebremst, so dass sich in der Schmelze ein Staudruck aufbaut. Dieser Staudruck in Verbindung mit der Schneckenrotation verdichtet und homogenisiert den als Spritzgießmaterial zu verspritzenden Kunststoff.

Die Schneckenposition wird gemessen und sobald sich eine für das Werkstückvolumen ausreichende Spritzgießmaterialmenge angesammelt hat, ist der Dosiervorgang beendet und die Schneckenrotation wird eingestellt. Ebenso wird die Schnecke aktiv oder passiv entlastet, so dass die Schmelze dekomprimiert wird.

## 2. Einspritzen

In der Einspritzphase wird die Spritzeinheit an die Schließeinheit gefahren, mit der Austrittsdüse angedrückt und die Schnecke rückseitig unter Druck gesetzt. Dabei wird die Schmelze unter hohem Druck, vorzugsweise bei einem Druck im Bereich von 500 bis 2000bar, durch die geöffnete Austrittsdüse und den Anguss bzw. das Angusssystem des Spritzgießwerkzeugs in den formgebenden Hohlraum gedrückt. Eine Rückstromsperre verhindert dabei ein Zurückströmen der Schmelze in Richtung Einfülltrichter.

Während des Einspritzens wird versucht, ein möglichst laminares Fließverhalten der Schmelze zu erreichen. Das heißt, die Schmelze wird im Spritzgießwerkzeug dort, wo sie die gekühlte Werkzeugwand berührt, sofort abgekühlt und bleibt erstarrt "kleben". Die nachrückende Schmelze wird durch den dadurch verjüngten Schmelzkanal mit noch höherer Geschwindigkeit und noch mehr Scherdeformation gedrückt und vorne an der Schmelzfront zum Rand hin dehndeformiert. Es überlagert sich Wärmeabfuhr über die Werkzeugwand und Wärmezufuhr durch Schererwärmung. Die hohe Einspritzgeschwindigkeit erzeugt in der Schmelze eine Schergeschwindigkeit, welche die Schmelze leichter fließen lässt. Ein schnelles Einspritzen ist nicht anzustreben, denn durch hohe Schergeschwindigkeiten kann ein Molekülabbau innerhalb des Kunststoffs verstärkt auftreten. Auch die Oberfläche des durch Spritzguss herzustellenden Erzeugnisses, dessen Aussehen und schließlich der Orientierungszustand der Kunststoffmoleküle werden durch die Einspritzphase beeinflusst.

## 3. Nachdrücken und Abkühlen

Da das Werkzeug kälter ist als die Kunststoffmasse, vorzugsweise weist das Werkzeug eine Temperatur im Bereich von 20 bis 120°C auf und die Kunststoffmasse weist vorzugsweise eine Temperatur im Bereich von 200 bis 300°C auf, kühlt die Schmelze in der Form ab und erstarrt bei Erreichen des Erstarrungspunkts des jeweils eingesetzten Kunststoffs, vorzugsweise des Thermoplasten bzw. des Thermoplast basierten Compounds.

Compoundieren ist ein Begriff aus der Kunststofftechnik, welcher mit Kunststoffaufbereitung gleichzusetzen ist und den Veredelungsprozess von Kunststoffen durch Beimischung von Zuschlagstoffen (Füllstoffe, Additive usw.) zur gezielten Optimierung der Eigenschaftsprofile beschreibt. Die Compoundierung erfolgt vorzugsweise in Extrudern und umfasst die Verfahrensoperationen Fördern, Aufschmelzen, Dispergieren, Mischen, Entgasen und Druckaufbau. siehe: **https://de.wikipedia.org/wiki/Compoundierung.** Mit Compound bezeichnet man deshalb einen mit Füllstoffen oder Additiven versetzten Thermoplasten oder Duroplasten.

Das Abkühlen bei Erreichen des Erstarrungspunkts des jeweils eingesetzten Kunststoffs geht einher mit einer Volumenschwindung, die sich nachteilig auf Maßhaltigkeit und Oberflächenqualität des zu fertigenden Erzeugnisses, in der vorliegenden Erfindung des im Verfahrensschritt g) zu fertigenden und mit der Außenseite des Hohlprofilgrundkörpers formschlüssig zu verbindenden Kunststoffelements auswirkt. Um diese Schwindung teilweise zu kompensieren, wird auch nach Füllung der Form ein reduzierter Druck aufrechterhalten, damit Kunststoffmaterial nachfließen und die Schwindung ausgleichen kann. Dieses Nachdrücken kann solange erfolgen, bis der Anguss erstarrt ist.

Nach Beendigung des Nachdrückens kann die Austrittsdüse geschlossen werden und in der Spritzeinheit bereits der Plastifizier- und Dosiervorgang für das nächste Formteil beginnen. Das Kunststoffmaterial in der Form kühlt in der Restkühlzeit weiter ab, bis auch die Seele, der flüssige Kern des Kunststoffauftrags, erstarrt ist und eine zum Entformen hinreichende Steifigkeit erreicht ist. Dieser Vorgang wird auch als Solidifikation bezeichnet und erfolgt erfindungsgemäß für den Kunststoffauftrag im Verfahrensschritt h).

Die Spritzeinheit kann dann von der Schließeinheit wegbewegt werden, da kein Kunststoff mehr aus dem Anguss austreten kann. Dies dient dazu, einen Wärmeübergang von der wärmeren Austrittsdüse auf den kälteren Anguss zu verhindern.

## 4. Entformen

Zum Entformen eines spritzgegossenen Erzeugnisses, bzw. des mit Kunststoffauftrag versehenen Hohlprofilgrundkörpers im erfindungsgemäßen Verfahrensschritt i), öffnet sich die Kavität und das Erzeugnis wird durch in die Kavität eindringende Stifte ausgeworfen und fällt entweder herunter (Schüttgut) oder wird durch Handlinggeräte aus dem Spritzgießwerkzeug entnommen und geordnet abgelegt oder direkt einer Weiterverarbeitung zugeführt. Vorzugsweise ist dafür das Spritzgieß- bzw. Presswerkzeug mit einer Auswerferseite versehen.

Der Anguss muss entweder durch separate Bearbeitung entfernt werden oder wird beim Entformen automatisch abgetrennt. Auch angussloses Spritzgießen ist mit Heißkanalsystemen, bei denen das Angusssystem ständig über der Erstarrungstemperatur des einzusetzenden Kunststoffs, vorzugsweise Thermoplasten, Duroplasten oder Compounds, bleibt und das enthaltene Material somit für den nächsten Schuss verwendet werden kann, möglich.

## Formpressen

Das Formpressen gehört zur Familie der Urformverfahren. Formpressen ist ein Herstellungsverfahren für Kunststoffe, geeignet für leicht gewölbte oder flache Bauteile. Haupteinsatzgebiet dieses Verfahrens ist die Automobilindustrie, wo es zur Produktion größerer Bauteile mit zweidimensionaler oder einfacher dreidimensionaler Struktur, insbesondere Motorhauben, Stoßfänger, Spoiler oder Heckklappen eingesetzt wird. Es können sowohl duroplastische als auch thermoplastische Kunststoffe verarbeitet werden.

Zu Beginn des Formpressverfahrens wird die zu verarbeitende Formmasse in die vorgesehene, aufgeheizte Kavität eingebracht. Anschließend wird die Kavität unter Einsatz eines Druckkolbens geschlossen. Durch den Druck erlangt die Formmasse die vom Werkzeug vorgegebene Form. Bei duroplastischen Kunststoffen dient die Temperatur zur Beeinflussung des Aushärtevorgangs, bei Thermoplasten zum Schmelzen des Kunststoffs. Nach dem Abkühlen kann das fertige Erzeugnis aus dem Formwerkzeug entnommen und ggf. nach- oder weiterverarbeitet werden.

Das Formpressverfahren eignet sich vor allem für mittelgroße Stückzahlen, da in diesem Fall die Werkzeugkosten in der Regel geringer sind als zum Beispiel beim Spritzgießen. Das Formpressen kann auch zur Herstellung von Faserverbundwerkstoffen eingesetzt werden, u.a. zur Herstellung von faserverstärkten Kunststoffen.

Siehe: **https://de.wikipedia.org/wiki/Formpressen**

Ein bekanntes Formpressverfahren für thermoplastische Kunststoffe ist vor allem das D-LFT (Direct Long Fiber Thermoplastic Molding) Verfahren. Ein besonders elegantes D-LFT Verfahren ist in DE-A 43 30 860 beschrieben.

Bekannte Formpressverfahren für duroplastische Kunststoffe sind vor allem das SMC-Verfahren (Sheet Molding Compound) und das BMC-Verfahren (Bulk Transfer Molding Compound). Ein SMC-Verfahren ist beispielsweise in EP 1386721 A1 beschrieben. Zu BMC-Verfahren siehe: Handbuch Spritzgießen, ISBN 978 3 446 15632 6, 1. Auflage 2001, Seiten 1022 - 1024, Carl Hanser Verlag.

## Kunststoffe

Im erfindungsgemäßen Spritzgieß- oder Fließpressverfahren für den Kunststoffauftrag im Verfahrensschritt g) einzusetzende Kunststoffe sind vorzugsweise Thermoplasten oder Duroplasten, besonders bevorzugt Thermoplasten.

Bevorzugte thermoplastische Kunststoffe sind Polyamide (PA), Polybutylenterephthalat (PBT), Polyethylenterephthalat (PET), Polyethylen (PE), Polypropylen (PP) und Polyvinylchlorid (PVC). Besonders bevorzugt wird als thermoplastischer Kunststoff für einen erfindungsgemäß einzusetzenden Hohlprofilgrundkörper Polyamid oder Polyester eingesetzt. Bevorzugt wird als Polyamid ein Polyamid 6 eingesetzt. Bevorzugt wird als Polyester Polybutylenterephthalat (PBT) oder Polyethylenterephthalat, insbesondere PBT, eingesetzt. Bevorzugte duroplastische Kunststoffe sind Epoxidharze, vernetzbare Polyurethane oder ungesättigte Polyesterharze.

Vorzugsweise wird der Thermoplast oder Duroplast in Form eines Compounds eingesetzt.

Besonders bevorzugt wird der in Verfahrensschritt g) aufzutragende Kunststoffauftrag aus einem thermoplastischen Kunststoff mit wenigstens einem Füll- oder Verstärkungsstoff hergestellt. Bevorzugt werden als Füll- oder Verstärkungsstoff Glasfasern eingesetzt.

Insbesondere bevorzugt werden auf 100 Massenanteile des thermoplastischen Kunststoffs Füll- oder Verstärkungsstoffe in Mengen im Bereich von 0,1 bis 85 Massenanteilen eingesetzt. Ganz besonders bevorzugt werden als Füll- oder Verstärkungsstoff Glasfasern eingesetzt. Insbesondere bevorzugt werden auf 100 Massenanteile des thermoplastischen Kunststoffs Füll- oder Verstärkungsstoffe in Mengen im Bereich von 15 bis 60 Massenanteilen eingesetzt.

Insbesondere bevorzugt wird ein Kunststoffauftrag aus einem glasfaserverstärkten Polyamid 6 mit 15 bis 60 Massenanteilen Glasfasern auf 100 Massenanteile Polyamid im Spritzgießverfahren eingesetzt. Derartige Compounds sind erhältlich unter der Bezeichnung Durethan® bei der Lanxess Deutschland GmbH, Köln.

Alternativ kann die in Verfahrensschritt g) aufzutragende Schmelze eines Kunststoffs auch aus einem duroplastischen Kunststoff hergestellt werden. Bevorzugt werden in diesem Fall Epoxidharze, vernetzbare Polyurethane und ungesättigte Polyesterharze eingesetzt.

Besonders bevorzugt erfolgt der Auftrag eines Kunststoffs im Verfahrensschritt g) mit einem duroplastischen Kunststoff mit wenigstens einem Füll- oder Verstärkungsstoff. Bevorzugt werden in diesem Fall als Füll- oder Verstärkungsstoff Glasfasern oder Kohlefasern eingesetzt.

Insbesondere bevorzugt werden auf 100 Massenanteile des duroplastischen Kunststoffs 10 bis 50 Massenanteile Glasfasern oder Kohlefasern als Füll- oder Verstärkungsstoff eingesetzt.

Je nach räumlicher Ausgestaltung eines innerhalb des wenigstens einen Hohlprofilgrundkörpers positionierten Stützelements, je nach Dimension der Wandstärke des Hohlprofilgrundkörpers und je nach Wahl des Materials des Hohlprofilgrundkörpers können in einer Ausführungsform der vorliegenden Erfindung im Verfahrensschritt g) durch den Spritzdruck des Spritzgießvorgangs oder Pressdruck des Fließpressvorgangs lokale Verformungen, vorzugsweise Sicken, an der dünnen Wandung des Hohlprofilgrundkörpers entstehen. Diese Verformungen oder Sicken können einen zusätzlichen positiven Einfluss auf die Festigkeit der Verbindung von Hohlprofilgrundkörper mit dem auf den Hohlprofilgrundkörper äußerlich aufzubringenden Kunststoffelement haben.

Der im Verfahrensschritt g) am Hohlprofilgrundkörper erzielte Verformungsgrad lokaler Verformungen, vorzugsweise in Form von Sicken, an der Hohlprofilgrundkörperwandung ist in einer Ausführungsform der vorliegenden Erfindung durch die Bruchdehnung des jeweiligen Materials des Hohlprofilgrundkörpers begrenzt. Wird diese überschritten kann es zum Aufreißen der Hohlprofilgrundkörperwandung kommen. Begrenzt werden kann die Dehnung jedoch durch eine Regelung des Spritz- bzw. Pressdrucks beim Kunststoffauftrag, oder aber durch die Gestalt der Negativform des Stützelements, im Sinne einer Weg-/Verformungsbegrenzung, die eine zu große Verformung, d. h. Dehnung des Materials, nicht zulässt bzw. begrenzt. Ebenso ist die Verformung von der Materialzusammensetzung und der Stärke der Hohlprofilgrundkörperwandung abhängig.

Je größer die Verformung der Hohlprofilgrundkörperwandung ausgeprägt ist, desto mehr greifen die wenigstens zwei Verbindungspartner - Hohlprofilgrundkörper und aufgebrachte Kunststoffkomponente - ineinander, und umso mehr gehen sie eine unlösbare formschlüssige Verbindung ein, die sich nur durch Zerstören voneinander wieder trennen lässt. Ziel des Verfahrensschritts g) sollte neben dem Kunststoffauftrag daher sein, die Dehnfähigkeit des jeweiligen Materials der Hohlprofilgrundkörperwandung möglichst maximal auszunutzen, aber die Bruchdehnung nicht zu überschreiten.

**Verfahrensschritt h)**

Im Verfahrensschritt h) erfolgt das Abkühlen des Kunststoffauftrags bzw. der Kunststoffüberspritzung, auch als Solidifikation bezeichnet. Der Begriff der Solidifikation beschreibt das Erstarren des in Verfahrensschritt g) aufgetragenen schmelzflüssigen Kunststoffs durch Abkühlen bzw. durch chemische Vernetzung zu einem Festkörper. Im Falle einer gleichzeitigen Formgebung können auf diese Weise direkt Funktionselemente, Strukturen und Flächen auf dem Hohlprofilgrundkörper aufgebracht werden.

In einer Ausführungsform der vorliegenden Erfindung und im Falle der unter Verfahrensschritt g) beschriebenen Sicken entsteht nach dem Erstarren der Kunststoffschmelze auf der äußeren Oberfläche des Hohlprofilgrundkörpers, vorzugsweise einem Metallrohr, ein Kunststoffauftrag in Form eines geschlossenen Kunststoffrings mit einer strukturierten Innenfläche, die exakt das positive Abbild der Sickenstruktur der Außenwandung des Hohlprofilgrundkörpers, vorzugsweise des Metallrohrs, darstellt.

Eine erfindungsgemäße schubsteife, schubfeste, hochbelastbare und formschlüssige Verbindung rund um die äußere Wandung des Hohlprofilgrundkörpers in Form eines Metallrohrs, ist entstanden.

Weitere Details zum Verfahrensschritt h) wurden bereits oben im Abschnitt **"Nachdrücken und Abkühlen"** beschrieben.

**Verfahrensschritt i)**

Im Verfahrensschritt i) wird das fertige Verbundteil aus dem Spritzgieß- bzw. Presswerkzeug entnommen, nachdem mit Erstarren der Kunststoffschmelze der Druck in der Kunststoffauftragung nicht mehr vorhanden ist und die Press- und Schließkraft mit dem Öffnen des Werkzeugs abgebaut wurde. Weitere Details wurden bereits oben im Abschnitt **"Entformen"** beschrieben.

**Verbundbauteil**

Erfindungsgemäß herzustellende Verbundbauteile werden in entsprechender Gestaltung vorzugsweise für den Kraftfahrzeugbau, insbesondere im Automobilbau eingesetzt. Bevorzugt handelt es sich dabei um Karosserieteile, insbesondere um ein sogenanntes Cross Car Beam (CCB), auch als Instrumententafelquerträger bezeichnet. Bekannt sind Instrumententafelquerträger beispielsweise aus US 5934744 A oder US 8534739 B.

Im erfindungsgemäßen Verbundbauteil versteifen und verstärken sich der Hohlprofilgrundkörper und die im Verfahrensschritt g) mittels einer Kunststoffschmelze aufgetragenen Kunststoffelemente gegenseitig. Ferner dienen die im Verfahrensschritt g) auf die äußere Wandung des Hohlprofilgrundkörpers aufgetragenen Kunststoffelemente darüber hinaus zur Funktionsintegration im Sinne einer System- bzw. Modulbildung zur Anbindung von Kunststoffstrukturen oder Kunststoffflächen.

Bevorzugte Ausführungsformen eines erfindungsgemäß herzustellenden Verbundbauteils weisen entweder Sicken oder ähnliche Verformungen und/oder Bohrungen oder ähnliche Öffnungen im Hohlprofilgrundkörper auf.

Durch das erfindungsgemäße Verfahren erhält man ein Verbundbauteil in dem die Wandung des Hohlprofilgrundkörpers im Bereich des wenigstens einen Stützelements und des wenigstens einen Kunststoffelements Sicken oder ähnliche Verformungen aufweist.

Durch das erfindungsgemäße Verfahren erhält man zudem vorzugsweise ein Verbundbauteil in dem die Wandung des Hohlprofilgrundkörpers im Bereich des wenigstens einen Stützelements und des wenigstens einen Kunststoffelements Bohrungen oder ähnliche Öffnungen aufweist.

Durch das erfindungsgemäße Verfahren erhält man vorzugsweise ein Verbundbauteil in dem die Wandung des Hohlprofilgrundkörpers im Bereich des wenigstens einen Stützelements und des wenigstens einen Kunststoffelements Sicken oder ähnliche Verformungen und Bohrungen oder ähnliche Öffnungen aufweist.

Besonders bevorzugte Ausführungsformen werden nachfolgend beschrieben:

### Ausführungsform 1

Verbundbauteil aus einem Hohlprofilgrundkörper und wenigstens einem Kunststoffelement, wobei der Hohlprofilgrundkörper wenigstens ein innerhalb des Hohlprofilgrundkörpers positioniertes Stützelement aufweist, das an der Stelle positioniert ist, an der das Kunststoffelement den Hohlprofilgrundkörper vollständig oder teilweise umfasst und der Hohlprofilgrundkörper zwischen dem wenigstens einen Stützelement und dem wenigstens einen Kunststoffelement Sicken oder ähnliche Verformungen aufweist.

### Ausführungsform 2

Verbundbauteil aus einem Hohlprofilgrundkörper und wenigstens einem Kunststoffelement, wobei der Hohlprofilgrundkörper wenigstens ein innerhalb des Hohlprofilgrundkörpers positioniertes Stützelement aufweist, das an der Stelle positioniert ist, an der das Kunststoffelement den Hohlprofilgrundkörper vollständig oder teilweise umfasst und der Hohlprofilgrundkörper zwischen dem wenigstens einen Stützelement und dem wenigstens einen Kunststoffelement Bohrungen oder ähnliche Öffnungen mit hindurchgespritztem Kunststoff aufweist.

### Ausführungsform 3

Verbundbauteil aus einem Hohlprofilgrundkörper und wenigstens einem Kunststoffelement, wobei der Hohlprofilgrundkörper wenigstens ein innerhalb des Hohlprofilgrundkörpers positioniertes Stützelement aufweist, das an der Stelle positioniert ist, an der das Kunststoffelement den Hohlprofilgrundkörper vollständig oder teilweise umfasst und der Hohlprofilgrundkörper zwischen dem wenigstens einen Stützelement und dem wenigstens einen Kunststoffelement Sicken oder ähnliche Verformungen und Bohrungen oder ähnliche Öffnungen mit hindurchgespritztem Kunststoff aufweist.

Entfernt man das wenigstens eine Stützelement aus dem Innern des Hohlprofilgrundkörpers in einem nachgelagerten Verfahrensschritt j), so erhält man entsprechende Verbundteile aus einem Hohlprofilgrundkörper und wenigstens einem mit diesem schubfest und schubsteif, formschlüssig verbundenen Kunststoffelement gemäß wenigstens einer der obigen Ausführungsformen 1 bis 3, nur ohne Stützelement(e).

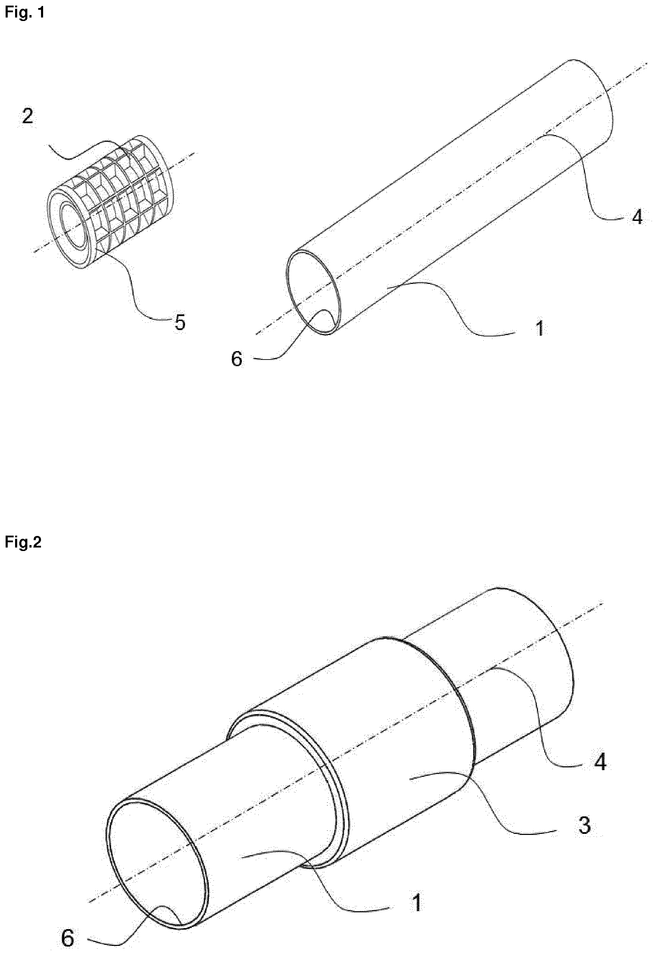

Die vorliegende Erfindung wird anhand der **Fig. 1** bis **Fig. 9** erläutert:

**Fig. 1** zeigt die wesentlichen bereitzustellenden Bestandteile für ein erfindungsgemäß herzustellendes Verbundbauteil, vor dem Spritzgieß- bzw. Pressverfahren, worin **1** für den Hohlprofilgrundkörper, hier in der Ausführungsform eines Rohres mit einer elliptischen Querschnittsform, und **2** für ein beispielhaft entsprechend dem Innenrohrdurchmesser angepasstes Stützelement steht. **4** zeigt die Längsachse des Hohlprofilgrundkörpers **1**, **5** die Außenquerschnittsform des Stützelements **2** und **6** die Innenquerschnittsform des Hohlprofilgrundkörpers. Die Außenquerschnittsform **5** ist kongruent zur Innenquerschnittsform **6**.

**Fig. 2** zeigt ein erfindungsgemäß herzustellendes Verbundbauteil nach dem Spritzgieß- bzw. Pressverfahren, worin **1** für den Hohlprofilgrundkörper, hier in der Ausführungsform eines Rohres mit einer kreisrunden Querschnittsform, und **3** für ein mit dem Hohlprofilgrundkörper formschlüssig verbundenes Kunststoffelement steht. **4** zeigt die Längsachse des Hohlprofilgrundkörpers und **6** die Innenquerschnittsform des Hohlprofilgrundkörpers.

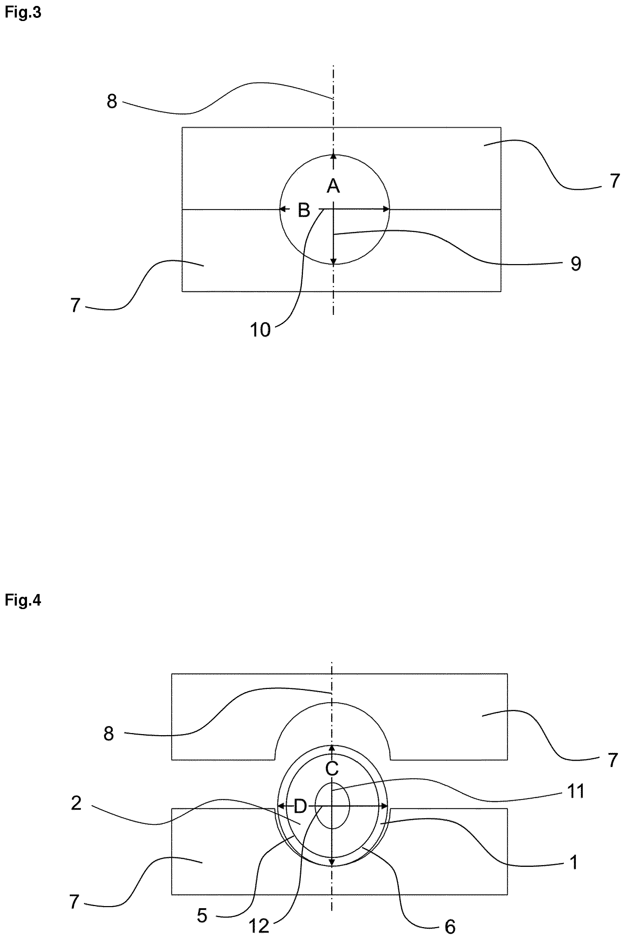

**Fig. 3** zeigt den Querschnitt eines erfindungsgemäß einzusetzenden Spritz- bzw. Presswerkzeugs **7** in geschlossenem Zustand im Bereich der axialen Enden eines erfindungsgemäß einzusetzenden Stützelements mit der Öffnungs- und Schließrichtung **8**. **9** zeigt das Werkzeugmaß A der Werkzeugkavität im Bereich der axialen Enden des Stützelements in Schließrichtung gesehen. **10** zeigt das Werkzeugmaß B der Werkzeugkavität im Bereich der axialen Enden des Stützelements rechtwinklig zur Schließrichtung gesehen.

**Fig. 4** zeigt den Querschnitt eines erfindungsgemäß einzusetzenden Spritz- bzw. Presswerkzeugs **7** im Bereich der axialen Enden eines Stützelements **2** bei geöffnetem Werkzeug und eingelegtem Hohlprofilgrundkörper **1** und ein innerhalb desselben positioniertes Stützelement **2. 11** zeigt das Außenmaß C des Hohlprofilgrundkörpers **1** in Schließrichtung gesehen. **12** zeigt das Außenmaß D des Hohlprofilgrundkörpers **1** der Werkzeugkavität in dem Bereich der axialen Enden des Stützelements rechtwinklig zur Schließrichtung gesehen.

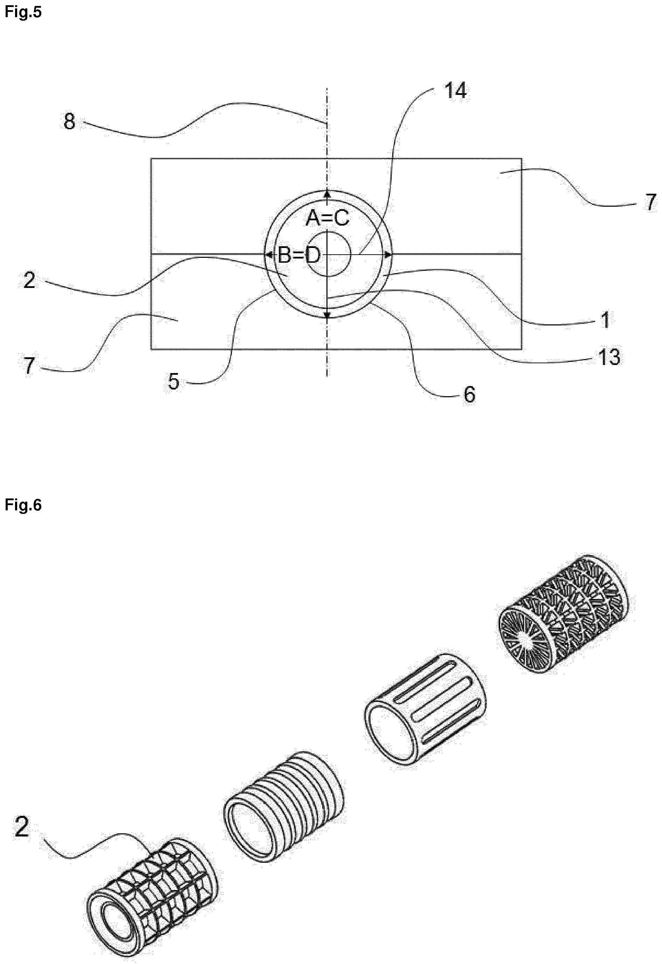

**Fig. 5** zeigt den Querschnitt eines erfindungsgemäß einzusetzenden Spritz- bzw. Presswerkzeugs **7** (hier mit zwei Werkzeughälften) im Bereich der axialen Enden eines Stützelements **2** in geschlossenem Zustand und mit Stützelement **2** enthaltendem Hohlprofilgrundkörper **1. 13** steht für das Außenmaß C des verspressten Hohlprofilgrundkörpers **1** im Bereich der axialen Enden des Stützelements **2** in Schließrichtung gesehen. Nach dem Verpressen ist das Hohlprofilgrundkörperaußenmaß C gleich dem Werkzeugmaß A. **14** steht für das Außenmaß C des verspressten Hohlprofilgrundkörpers **1** im Bereich der axialen Enden des Stützelements rechtwinklig zur Schließrichtung gesehen. Nach dem Verpressen ist das Werkzeugmaß B gleich dem Hohlprofilgrundkörperaußenmaß D.

**Fig. 6** zeigt Variationen erfindungsgemäß einzusetzender Stützelemente **2** in elliptischer Zylinderform die innerhalb eines Hohlprofilgrundkörpers in Form eines Rohres positioniert werden. Die hier gezeigten Stützelemente weisen eine von oben nach unten durchgehende Öffnung auf, womit diese Stützelemente den Fluss des bei einem gegebenenfalls zusätzlich anzuwendenden IHU-Verfahren zum Einsatz kommenden Fluids durch das Stützelement ermöglichen.

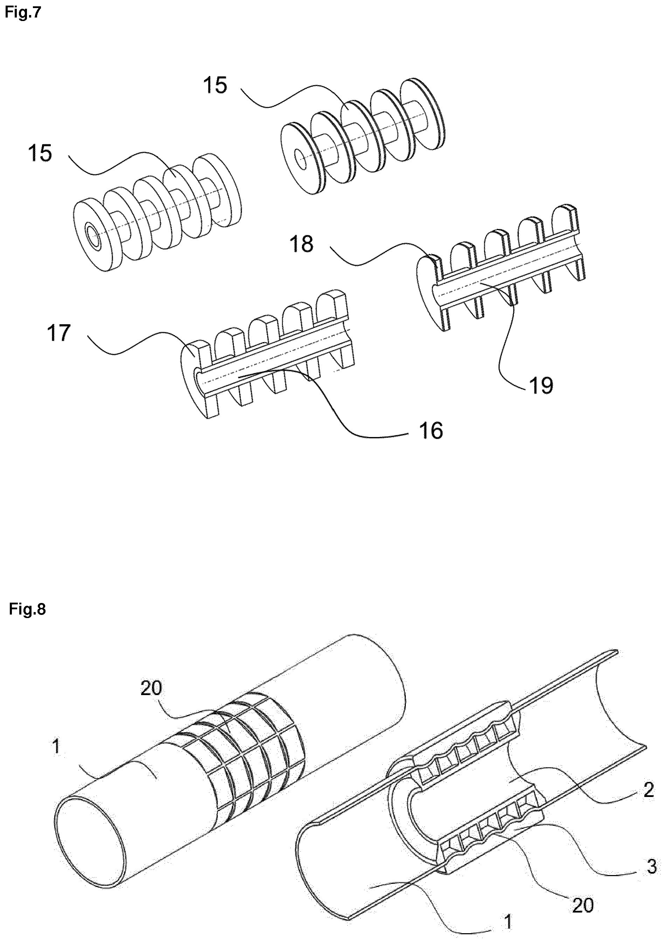

**Fig. 7** zeigt Variationen von Kunststoff-Metall-Hybrid Stützelementen **15** in elliptischer Zylinderform die innerhalb eines Hohlprofilgrundkörpers in Form eines Rohres positioniert werden. Die hier gezeigten Stützelemente weisen in einer Ausführungsform ein zylinderförmiges Metallrohr **16** mit aufgespritzten Kunststoffrippen **17** auf und in einer alternativen Ausführungsform mehrere metallische Rundscheiben **18** mit einem zylinderförmigen Kunststoffrohr **19** im Zentrum, das die metallischen Rundscheiben zu einem einheitlichen Stützelement verbindet.

**Fig. 8** zeigt in der linken Darstellung ein erfindungsgemäßes Verbundbauteil gemäß der oben beschriebenen **Ausführungsform 1**, worin die Wandung des Hohlprofilgrundkörpers **1** eine durch die Struktur des Stützelements **2** vorgegebene Strukturierung mit Sicken **20** aufweist, wobei das Kunststoffelement **3** entfernt wurde. Die ursprünglich elliptische Form des Hohlprofilgrundkörpers ist nach Abschluss des Verfahrens in eine runde Form übergegangen. Die rechte Darstellung zeigt ein erfindungsgemäßes Verbundbauteil entlang seiner Längsachse in aufgeschnittener Form mit innenliegendem Stützelement **2**, das selbst nach mechanischer Entfernung des Kunststoffelements **3** im Hohlprofilgrundkörper **1** verbleibt.

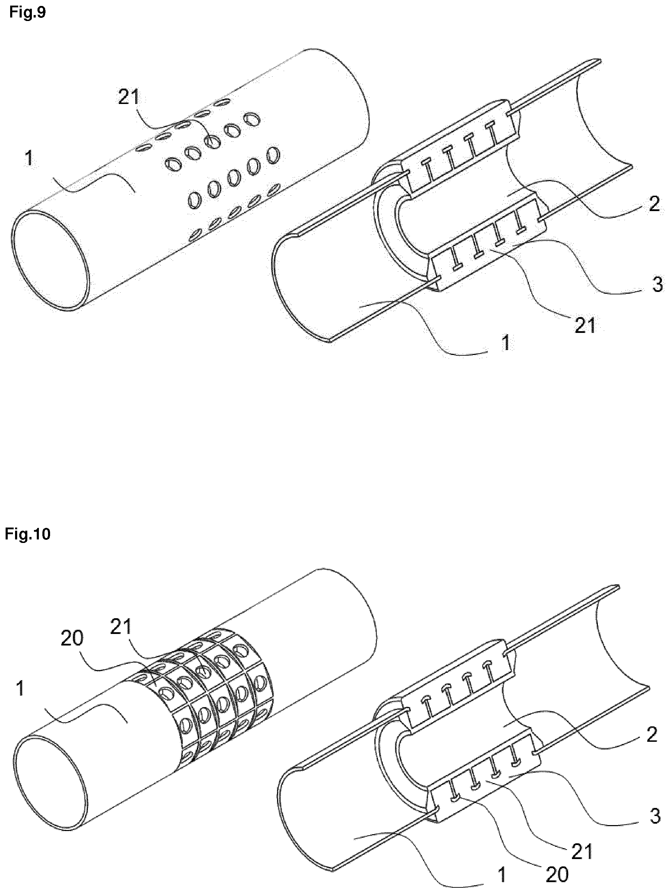

**Fig.** 9 zeigt eine zu **Fig. 8** alternative Ausführungsform eines Hohlprofilgrundkörpers **1** in Form eines Rohres mit einer Vielzahl an Bohrungen **21**, sowie in aufgeschnittener Darstellung ein durch Kunststoffauftrag **3** auf die äußere Wandung des Hohlprofilgrundkörpers fixiertes Stützelement **2** Hierbei ist der Kunststoff durch die Bohrungen hindurch in vorgegebene Bereiche des Stützelements **2** eingetreten und darin ausgehärtet oder erstarrt. **Fig. 9** stellt somit ein Verbundbauteil gemäß der oben beschriebenen **Ausführungsform 2** dar.

**Fig. 10** zeigt ein erfindungsgemäßes Verbundbauteil gemäß der oben beschriebenen **Ausführungsform 3**, worin der Hohlprofilgrundkörper **1** mit innenliegendem Stützelement **2** und aufgetragenem Kunststoffelement **3** sowohl eine Vielzahl Sicken **20**, als auch eine Vielzahl Bohrungen **21** aufweist.

**Patentansprüche**

1. Verfahren zur Herstellung eines Verbundbauteils durch

    a) Bereitstellen eines Press- oder Gießwerkzeugs (7) mit wenigstens einer zu öffnenden Kavität und einem Werkzeugmaß A in Schließrichtung (9) und einem Werkzeugmaß B rechtwinklig zur Schließrichtung (10),
    b) Bereitstellen wenigstens eines Metallrohres in Form eines Hohlzylinders als Hohlprofilgrundkörper (1) mit einem Verhältnis von Durchmesser zu Wanddicke im Bereich von 5:1 bis 300:1, dessen Außenmaß C (11) um einen Bereich von 0,1 bis 5% größer ist als das Werkzeugmaß A (9), und dessen Außenmaß D (12) um einen Bereich von 0,1 bis 5% kleiner ist, als das Werkzeugmaß B (10) und die Angaben zu C und D sich auf 90° in Richtung zur Längsachse des Hohlprofilgrundkörpers (1) gesehen beziehen,
    c) Bereitstellen wenigstens eines Stützelements (2), dessen Außenmaß oder Außenquerschnittsform kongruent dem Innenmaß oder der Innenquerschnittsform des Hohlprofilgrundkörpers (1) entspricht,

d) Einbringen und Positionieren des wenigstens einen Stützelements (2) innerhalb des wenigstens einen Hohlprofilgrundkörpers (1) an den Positionen, an denen außerhalb des Hohlprofilgrundkörpers (1) der Auftrag von Kunststoff (3) erfolgen wird, sowie Fixieren desselben,

e) Einlegen des wenigstens ein Stützelement (2) enthaltenden Hohlprofilgrundkörpers (1) in die wenigstens eine Kavität des Spritzgieß- oder Presswerkzeugs,

f) Schließen der wenigstens einen Kavität des Spritzgieß- oder Presswerkzeugs und Verpressen des Hohlprofilgrundkörpers (1) in Schließrichtung der wenigstens einen Kavität,

g) äußeres Auftragen von Kunststoff (3) in Form einer Schmelze auf den Hohlprofilgrundkörper (1) und Verformung des Hohlprofilgrundkörpers (1) durch den Spritz- oder Pressdruck,

h) Abkühlen der auf den Hohlprofilgrundkörper (1) in f) aufgebrachten Kunststoffschmelze, und

i) Entnehmen des fertigen Verbundbauteils aus dem Spritzgießwerkzeug.

2. Verfahren gemäß Anspruch 1, **dadurch gekennzeichnet, dass** während oder nach Verfahrensschritt d) wenigstens eine Sicke (20) von außen in die Wandung des Hohlprofilgrundkörpers (1) im Bereich des wenigstens einen Stützelements (2) eingebracht wird.

3. Verfahren gemäß Anspruch 1 oder 2, **dadurch gekennzeichnet, dass** vor, während oder nach Verfahrensschritt b) wenigstens ein Loch (21) von außen in die Wandung des Hohlprofilgrundkörpers (1) im Bereich des wenigstens einen Stützelements (2) eingebracht wird.

4. Verfahren gemäß einem der Ansprüche 1 bis 3, **dadurch gekennzeichnet, dass** während oder nach Verfahrensschritt d) wenigstens ein Loch (21), bevorzugt mehrere Löcher (21), von außen in die Wandung des Hohlprofilgrundkörpefs (1) im Bereich des wenigstens einen Stützelements (2) eingebracht werden, vorzugsweise exakt an der Position des wenigstens einen Stützelements (2).

5. Verfahren gemäß einem der Ansprüche 1 bis 4, **dadurch gekennzeichnet, dass** nach dem Verfahrensschritt d) und vor dem Verfahrensschritt e) wenigstens ein Kunststoffschmelzevolumen in wenigstens einer für diese Zwecke vorgesehenen Kavität im Spritzgießwerkzeug oder Presswerkzeug abgelegt und im Verfahrensschritt f) durch Schließen des Spritzgieß- oder Presswerkzeugs das Kunststoffschmelzevolumen lokal verpresst und von außen gegen die Wandung des Hohlprofilgrundkörpers (1) sowie gleichzeitig gegen das im Hohlprofilgrundkörper (1) positionierte wenigstens eine Stützelement (2) angepresst, oder um den Hohlprofilgrundkörper (1) herum gepresst wird.

6. Verfahren gemäß einem der Ansprüche 1 bis 5, **dadurch gekennzeichnet, dass** nach dem Verfahrensschritt h) ein zusätzliches Innenhochdruckverfahren zur Formänderung des Hohlprofilgrundkörpers an den Positionen angewendet wird, an denen sich kein Stützelement (2) und auch kein Kunststoffauftrag (3) befindet.

7. Verfahren gemäß einem der Ansprüche 1 bis 6, **dadurch gekennzeichnet, dass** nach dem Verfahrensschritt i) der Hohlprofilgrundkörper (1) an wenigstens einer Position durch das Einwirken zusätzlicher Biegekräfte an Positionen, an denen sich kein Stützelement (2) und auch keine Kunststoffauftrag (3) befindet, verformt wird.

8. Verfahren gemäß einem der Ansprüche 1 bis 6, **dadurch gekennzeichnet, dass** nach dem Verfahrensschritt d) und vor dem Verfahrensschritt e) der Hohlprofilgrundkörper (1) an wenigstens einer Position durch das Einwirken zusätzlicher Biegekräfte verformt wird.

9. Verfahren gemäß Anspruch 7 oder 8, **dadurch gekennzeichnet, dass** man zusätzliche Biegekräfte einwirken lässt, wenn die endgültige Verbundbauteilform von der eines geraden Hohlprofilgrundkörpers (1) abweicht.

10. Verfahren gemäß Anspruch 9, **dadurch gekennzeichnet, dass** die Verformung sowohl an Positionen an denen sich innerhalb des Hohlprofilgrundkörpers (1) ein Stützelement (2) befindet, als auch an Positionen an denen sich kein Stützelement (2) im Innern des Hohlprofilgrundkörpers (1) befindet durchgeführt wird.

11. Verfahren gemäß einem der Ansprüche 1 bis 10, **dadurch gekennzeichnet, dass** die Verbindung von Hohlprofilgrundkörper (1) und angespritztem Kunststoff (3) mit der Blockierung aller Freiheitsgrade, translatorisch in X-, Y- und Z-Richtung und rotatorisch um die X-, Y- und Z-Achse mittels einer Oberflächenbehandlung der äußeren Wandung des Hohlprofilgrundkörpers (1) zusätzlich unterstützt wird.

12. Verfahren gemäß Anspruch 11, **dadurch gekennzeichnet, dass** die Oberflächenbehandlung vor wenigstens einem der Verfahrensschritte b), c), d) oder e) erfolgt.

13. Verfahren gemäß Anspruch 11 oder 12, **dadurch gekennzeichnet, dass** die Oberflächenbehandlung durch Auftrag wenigstens eines Haftvermittlers, durch eine Plasma-Oberflächenaktivierung, durch eine Laserstrukturierung, durch eine chemische Vorbehandlung oder durch ein additives Auftragsverfahren erfolgt.

14. Verfahren gemäß Anspruch 13, **dadurch gekennzeichnet, dass** eine chemische Vorbehandlung durch den Einsatz von Säuren oder Basen und die Vorbehandlung durch additives Auftragsverfahren mittels thermischem Metallaufspritzverfahren erfolgt.

15. Verfahren gemäß einem der Ansprüche 1 bis 14, **dadurch gekennzeichnet, dass** das Verpressen des Hohlprofilgrundkörpers (1) in Verfahrensschritt f) lokal in Schließrichtung der wenigstens einen Kavität an der Position oder den Positionen, an denen sich die axialen Enden des wenigstens einen, im Hohlprofilgrundkörper (1) positionierten Stützelements (2) befinden, erfolgt.

16. Verfahren gemäß einem der Ansprüche 1 bis 15, **dadurch gekennzeichnet, dass** das äußere Auftragen von Kunststoff (3) in Verfahrensschritt g) lokal begrenzt in dem Bereich des wenigstens einen, im Hohlprofilgrundkörper (1) positionierten Stützelements (2) und die Verformung des Hohlprofilgrundkörpers (1) durch den Spritz- oder Pressdruck nur im Bereich des wenigstens einen, im Hohlprofilgrundkörper (1) positionierten Stützelements (2) erfolgt.

**Claims**

1. Method for the production of a composite component by

    a) provision of a pressing or casting mould (7) with at least one cavity to be opened and a mould dimension A in the closing direction (9) and a mould dimension B perpendicular to the closing direction (10),
    b) provision of at least one metal tube in the form of a hollow cylinder as main hollow profile body (1) with a ratio of diameter to wall thickness in the range of 5:1 to 300:1, whose external dimension C (11) is greater by a range of 0.1 to 5% than mould dimension A (9) and whose external dimension D (12) is smaller by a range of 0.1 to 5% than mould dimension B (10), with the data on C and D based on 90° viewed in the direction of the longitudinal axis of the main hollow profile body (1),
    c) provision of at least one supporting element (2), whose external dimension or external cross-sectional shape congruently corresponds to the internal dimension or the internal cross-sectional shape of the main hollow profile body (1),
    d) introduction and positioning of the at least one supporting element (2) inside the at least one main hollow profile body (1) at the sites where the application of plastic (3) will take place outside the main hollow profile body (1), and fixation thereof,
    e) insertion of the main hollow profile body (1) containing at least one supporting element (2) into the at least one cavity of the injection mould or compression mould,
    f) closing of the at least one cavity of the injection mould or compression mould and pressing of the main hollow profile body (1) in the closing direction of the at least one cavity,
    g) external application of plastic (3) in the form of a melt to the main hollow profile body (1) and deformation of the main hollow profile body (1) by the injection pressure or pressing force,
    h) cooling of the plastic melt applied to the main hollow profile body (1) in f), and
    i) removal of the finished composite component from the injection mould.

2. Method according to Claim 1, **characterized in that**, during or after method step d), at least one crimp (20) is introduced from outside into the wall of the main hollow profile body (1) in the area of the at least one supporting element (2).

3. Method according to Claim 1 or 2, **characterized in that** before, during or after method step b), at least one hole (21) is introduced from outside into the wall of the main hollow profile body (1) in the area of the at least one supporting element (2).

4. Method according to any of Claims 1 to 3, **characterized in that**, during or after method step d), at least one hole (21), preferably a plurality of holes (21), is/are introduced into the wall of the main hollow profile body (1) in the area of the at least one supporting element (2), preferably at the exact position of the at least one supporting element (2).

5. Method according to any of Claims 1 to 4, **characterized in that**, after method step d) and before method step e), at least one plastic melt volume is deposited in at least one cavity provided for this purpose in the injection mould or compression mould, and, in method step f), by closing of the injection mould or compression mould, the plastic melt volume is locally compressed and pressed from outside against the wall of the main hollow profile body (1) and simultaneously against the at least one supporting element (2) positioned in the main hollow profile body (1), or pressed around the main hollow profile body (1).

6. Method according to any of Claims 1 to 5, **characterized in that**, after method step h), an additional internal high pressure method for changing the shape of the main hollow profile body is used at the sites where there is no supporting element (2) and also no plastic application (3).

7. Method according to any of Claims 1 to 6, **characterized in that**, after method step i), the main hollow profile body (1) is deformed at at least one position by the action of additional bending forces at sites where there is no supporting element (2) and also no plastic application (3).

8. Method according to any of Claims 1 to 6, **characterized in that**, after method step d) and before method step e), the main hollow profile body (1) is deformed at at least one position by the action of additional bending forces.

9. Method according to Claim 7 or 8, **characterized in that** additional bending forces are applied if the final component shape deviates from that of a straight main hollow profile body (1).

10. Method according to Claim 9, **characterized in that** the deformation is carried out both at sites where a supporting element (2) is located inside the main hollow profile body (1) and at sites where no supporting element (2) is located inside the main hollow profile body (1).

11. Method according to any of Claims 1 to 10, **characterized in that** the connection of the main hollow profile body (1) and the moulded-on plastic (3) is additionally supported by the blocking of all degrees of freedom, translationally in the X, Y and Z direction and rotationally about the X, Y, and Z axis, by means of a surface treatment of the outer wall of the main hollow profile body (1).

12. Method according to Claim 11, **characterized in that** the surface treatment is carried out before at least one of method steps b), c), d) or e).

13. Method according to Claim 11 or 12, **characterized in that** the surface treatment is carried out by application of at least one adhesion promoter, by plasma surface activation, by laser structuring, by chemical pretreatment or by an additive application method.

14. Method according to Claim 13, **characterized in that** a chemical pretreatment is carried out by using acids or bases and the pretreatment takes place by an additive application method by means of a thermal metal injection moulding application method.

15. Method according to any of Claims 1 to 14, **characterized in that** the pressing of the main hollow profile body (1) in method step f) takes place locally in the closing direction of the at least one cavity at the position or sites where the axial ends of the at least one supporting element (2) positioned in the main hollow profile body (1) are located.

16. Method according to any of Claims 1 to 15, **characterized in that** the external application of plastic (3) in method step g) is carried out in a locally limited manner in the area of the at least one supporting element (2) positioned in the main hollow profile body (1) and the deformation of the main hollow profile body (1) by the injection pressure or pressing force takes place only in the area of the at least one supporting element (2) positioned in the main hollow profile body (1).

**Revendications**

1. Procédé de fabrication d'un composant composite par

   a) la mise à disposition d'un outil de pressage ou de moulage (7) avec au moins une cavité à ouvrir et une mesure d'outil A dans la direction de fermeture (9) et une mesure d'outil B à angle droit de la direction de fermeture (10),
   b) la mise à disposition d'au moins un tube métallique sous la forme d'un cylindre creux en tant que corps de base de profilé creux (1) avec un rapport de diamètre sur épaisseur de paroi dans la plage allant de 5:1 à 300:1, dont la mesure extérieure C (11) est supérieure d'une plage allant de 0,1 à 5 % à la mesure d'outil A (9), et dont la mesure extérieure D (12) est inférieure d'une plage allant de 0,1 à 5 % à la mesure d'outil B (10) et les données relatives à C et D se rapportent à une observation à 90° dans la direction de l'axe longitudinal du corps de base de profilé creux (1),
   c) la mise à disposition d'au moins un élément support (2), dont la mesure extérieure ou la forme de section transversale extérieure correspond de manière congruente à la mesure intérieure ou à la forme de section transversale intérieure du corps de base de profilé creux (1),
   d) l'introduction et le positionnement dudit au moins un élément support (2) à l'intérieur dudit au moins un corps de base de profilé creux (1) aux positions auxquelles l'application de matière plastique (3) a lieu à l'extérieur du corps de base de profilé creux (1), ainsi que la fixation de celui-ci,
   e) l'insertion du corps de base de profilé creux (1) contenant au moins un élément support (2) dans ladite au moins une cavité de l'outil de moulage par injection ou de pressage,

f) la fermeture de ladite au moins une cavité de l'outil de moulage par injection ou de pressage et le pressage du corps de base de profilé creux (1) dans la direction de fermeture de ladite au moins une cavité,

g) l'application extérieure de matière plastique (3) sous la forme d'une masse fondue sur le corps de base de profilé creux (1) et la déformation du corps de base de profilé creux (1) par la pression d'injection ou de pressage,

h) le refroidissement de la masse fondue de matière plastique appliquée sur le corps de base de profilé creux (1) en f), et

i) l'extraction du composant composite fini de l'outil de moulage par injection.

2. Procédé selon la revendication 1, **caractérisé en ce que**, pendant ou après l'étape de procédé d), au moins une nervure (20) est introduite depuis l'extérieur dans la paroi du corps de base de profilé creux (1) dans la zone dudit au moins un élément support (2).

3. Procédé selon la revendication 1 ou 2, **caractérisé en ce qu'**avant, pendant ou après l'étape de procédé b), au moins un orifice (21) est introduit depuis l'extérieur dans la paroi du corps de base de profilé creux (1) dans la zone dudit au moins un élément support (2).

4. Procédé selon l'une quelconque des revendications 1 à 3, **caractérisé en ce que**, pendant ou après l'étape de procédé d), au moins un orifice (21), de préférence plusieurs orifices (21), sont introduits depuis l'extérieur dans la paroi du corps de base de profilé de base (1) dans la zone dudit au moins un élément support (2), de préférence exactement à la position dudit au moins un élément support (2).

5. Procédé selon l'une quelconque des revendications 1 à 4, **caractérisé en ce qu'**après l'étape de procédé d) et avant l'étape de procédé e), au moins un volume de masse fondue de matière plastique est déposé dans au moins une cavité prévue à cette fin dans l'outil de moulage par injection ou l'outil de pressage et, dans l'étape de procédé f), par fermeture de l'outil de moulage par injection ou de pressage, le volume de masse fondue de matière plastique est pressé localement et compressé depuis l'extérieur contre la paroi du corps de base de profilé creux (1), ainsi que simultanément contre ledit au moins un élément support (2) positionné dans le corps de base de profilé creux (1), ou pressé autour du corps de base de profilé creux (1).

6. Procédé selon l'une quelconque des revendications 1 à 5, **caractérisé en ce qu'**après l'étape de procédé h), un procédé à pression intérieure élevée supplémentaire pour la modification de forme du corps de base de profilé creux est appliqué aux positions auxquelles aucun élément support (2) et également aucune application de matière plastique (3) ne se trouve.

7. Procédé selon l'une quelconque des revendications 1 à 6, **caractérisé en ce qu'**après l'étape de procédé i), le corps de base de profilé creux (1) est déformé à au moins une position par l'action de forces de flexion supplémentaires aux positions auxquelles aucun élément support (2) et également aucune application de matière plastique (3) ne se trouve.

8. Procédé selon l'une quelconque des revendications 1 à 6, **caractérisé en ce qu'**après l'étape de procédé d) et avant l'étape de procédé e), le corps de base de profilé creux (1) est déformé à au moins une position par l'action de forces de flexion supplémentaires.

9. Procédé selon la revendication 7 ou 8, **caractérisé en ce que** des forces de flexion supplémentaires sont laissées agir lorsque la forme de composant composite finale est différente de celle d'un corps de base de profilé creux droit (1).

10. Procédé selon la revendication 9, **caractérisé en ce que** la déformation est réalisée aussi bien à des positions auxquelles un élément support (2) se trouve à l'intérieur du corps de base de profilé creux (1) qu'à des positions auxquelles aucun élément support (2) ne se trouve à l'intérieur du corps de base de profilé creux (1).

11. Procédé selon l'une quelconque des revendications 1 à 10, **caractérisé en ce que** la liaison du corps de base de profilé creux (1) et de la matière plastique (3) injectée est en outre supportée avec le blocage de tous les degrés de liberté, par translation dans la direction X, Y et Z et par rotation autour de l'axe X, Y et Z au moyen d'un traitement de surface de la paroi extérieure du corps de base de profilé creux (1).

12. Procédé selon la revendication 11, **caractérisé en ce que** le traitement de surface a lieu avant au moins une des étapes de procédé b), c), d) ou e).

13. Procédé selon la revendication 11 ou 12, **caractérisé en ce que** le traitement de surface a lieu par application d'au moins un promoteur d'adhésion, par une activation de surface par plasma, par une structuration laser, par un prétraitement chimique ou par un procédé d'application additif.

14. Procédé selon la revendication 13, **caractérisé en ce qu'**un prétraitement chimique a lieu par l'utilisation d'acides ou de bases et le prétraitement a lieu par un procédé d'application additif au moyen d'un procédé thermique de pulvérisation de métal.

**15.** Procédé selon l'une quelconque des revendications 1 à 14, **caractérisé en ce que** le pressage du corps de base de profilé creux (1) dans l'étape de procédé f) a lieu localement dans la direction de fermeture de ladite au moins une cavité à la position ou aux positions auxquelles les extrémités axiales dudit au moins un élément support (2) positionné dans le corps de base de profilé creux (1) se trouvent.

**16.** Procédé selon l'une quelconque des revendications 1 à 15, **caractérisé en ce que** l'application extérieure de matière plastique (3) dans l'étape de procédé g) a lieu de manière limitée localement dans la zone dudit au moins un élément support (2) positionné dans le corps de base de profilé creux (1) et la déformation du corps de base de profilé creux (1) par la pression d'injection ou de pressage a lieu uniquement dans la zone dudit au moins un élément support (2) positionné dans le corps de base de profilé creux (1).

**Fig. 1**

**Fig.2**

**Fig.3**

8

7

A

B

9

7

10

**Fig.4**

8

7

C

11

2

D

7

1

5

12

6

**Fig.5**

**Fig.6**

**Fig.7**

**Fig.8**

**Fig.9**

**Fig.10**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102014019724 A1
- US 20120189403 A1
- WO 2009077026 A1
- DE 4124021 C2
- EP 0370342 A1
- DE 4330860 A
- EP 1386721 A1
- US 5934744 A
- US 8534739 B

**In der Beschreibung aufgeführte Nicht-Patentliteratur**

- **W. MICHAELI ; G. MENGES ; P. MOHREN.** Anleitung zum Bau von Spritzgießwerkzeugen. Carl Hanser Verlag München Wien, 1999
- Handbuch Spritzgießen. Carl Hanser Verlag, 2001, 1022-1024